# EUROPEAN PATENT SPECIFICATION

(11) **EP 3 885 206 B1**
(45) Date of publication and mention of the grant of the patent: **04.10.2023**
(21) Application number: 20805030.2
(22) Date of filing: 02.04.2020
(51) Int. Cl.: B60R 25/25, G06F 21/32, B60R 16/037, G06V 20/59, G06V 40/16

(54) **FACIAL LOGIN SETTING GUIDING METHOD, VEHICLE-MOUNTED SYSTEM AND VEHICLE**
VERFAHREN ZUR EINSTELLUNGSANLEITUNG FÜR LOGIN PER GESICHTSERKENNUNG, FAHRZEUGMONTIERTES SYSTEM UND FAHRZEUG
PROCÉDÉ DE GUIDAGE DE RÉGLAGE DE CONNEXION FACIALE, SYSTÈME MONTÉ SUR UN VÉHICULE ET VÉHICULE

(30) Priority: 15.05.2019 CN 201910403673
(43) Date of publication of application: 29.09.2021
(73) Proprietor: Guangzhou Xiaopeng Autopilot Technology Co., Ltd., Guangzhou, Guangdong 510640 (CN)
(72) Inventor: RAO, Heng, Guangzhou, Guangdong 510640 (CN); YAN, Zhenjie, Guangzhou, Guangdong 510640 (CN); DAI, Guanqi, Guangzhou, Guangdong 510640 (CN); GAO, Wenmin, Guangzhou, Guangdong 510640 (CN); HU, Zhimiao, Guangzhou, Guangdong 510640 (CN); JIANG, Jialiang, Guangzhou, Guangdong 510640 (CN); CAO, Zhiling, Guangzhou, Guangdong 510640 (CN)
(74) Representative: Ran, Handong
(86) International application number: PCT/CN2020/083065
(87) International publication number: WO 2020/228443

(56) References cited:
- WO-A1-2018/125563
- CN-A- 102 254 164
- CN-A- 106 335 469
- CN-A- 107 679 514
- CN-A- 107 679 514
- CN-A- 108 216 117
- CN-A- 108 216 117
- CN-A- 108 288 046
- CN-A- 108 319 837
- CN-A- 110 171 389
- JP-A- 2005 119 528
- JP-A- 2009 113 621
- US-A1- 2015 043 790
- US-A1- 2017 099 295
- US-A1- 2018 365 400
- US-A1- 2019 080 189

## Description

### CROSS REFERENCE

The present disclosure claims priority to Chinese Patent Application No. CN201910403673.4, titled "METHOD FOR GUIDANCE OF FACE LOGIN SETTING, VEHICLE-MOUNTED SYSTEM AND VEHICLE" and filed on May 15, 2019.

### TECHNICAL FIELD

The present disclosure relates to the field of intelligent vehicle technologies, and more particularly, to a method for guidance of face login setting, a vehicle-mounted system, and a vehicle.

### BACKGROUND

In recent years, with the development of face recognition technologies, the face recognition technologies have permeated into various application fields, such as quick payment and community access control, etc. In the field of intelligent vehicles, the face recognition technologies can be mainly used to authenticate identity information of people in the vehicles, and implement quick face login, to protect property safety of the vehicles, and to make personalized configuration of the vehicles (such as adjusting seat positions).

To achieve quick face login, users in the vehicles need to log into accounts on vehicle-mounted screens in advance, and face toward vehicle-mounted cameras to input face images after clicking face authentication entrances in personal information pages to complete settings of face login. However, in practice it has been found that this method fails to guide actual operations for the users in the vehicles, such that the users in the vehicles repeat operation steps for many times when they are not familiar with setting processes of face login, which increases operation inconvenience in settings of the face login. US 2018/365400 A1 discloses biometric authentication/authorization for vehicle passengers and/or drivers through the use of biometric identifiers. CN 107679514A discloses a face recognition method and an electronic equipment.

### SUMMARY

Embodiments of the present disclosure disclose a method for guidance of face login setting, a vehicle-mounted system, and a vehicle. By using this method, a user in the vehicle can be guided to perform face login setting, such that operability of the face login setting is improved.

The invention is set out in the appended set of claims.

Compared with the existing technologies, the embodiments of the present disclosure have following beneficial effects.

In the embodiments of the present disclosure, when it is detected that the vehicle meets a preset condition, by popping up a guidance window for face authentication, the user is directly guided to operate on an authentication entrance in the guidance window to enter a face authentication process. That is, it is unnecessary for the user to manually search for the face authentication entrance from a personal information page because the user can be timely informed and guided to finish the face authentication, and thus operation steps may be simplified. Moreover, by outputting an information collection guidance animation and an information collection guidance voice, the user may be guided to adjust a sitting posture and a face orientation according to instructions of the information collection guidance animation and the information collection guidance voice, such that a whole face of the user can be detected, which can reduce unnecessary re-shooting operations and increase operability and efficiency of face authentication. Furthermore, an accuracy rate of subsequent face recognition can also be greatly increased by collecting more accurate face feature information.

### BRIEF DESCRIPTION OF THE DRAWINGS

To describe the technical solutions of the embodiments of the present disclosure more clearly, the accompanying drawings required for describing the embodiments will be briefly introduced below. Apparently, the accompanying drawings in the following description are merely some embodiments of the present disclosure. To those of ordinary skills in the art, other accompanying drawings may also be derived from these accompanying drawings without creative efforts.
FIG. 1 illustrates a schematic flow chart of a method for guidance of face login setting according to an embodiment of the present disclosure;
FIG. 2 is a schematic diagram showing instrument display interface and guidance window interface under an authentication success scenario according to an embodiment of the present disclosure;
FIG. 3 illustrates a schematic flow chart of another method for guidance of face login setting according to an embodiment of the present disclosure;
FIG. 4 is a schematic diagram showing instrument display interface and guidance window interface in a scenario of launch failure of a camera device according to an embodiment of the present disclosure;
FIG. 5 illustrates a schematic flow chart of still another method for guidance of face login setting according to an embodiment of the present disclosure;
FIG. 6 is a schematic diagram showing instrument display interface and guidance window interface under an account binding-change scenario according to an embodiment of the present disclosure;
FIG. 7 is a schematic diagram showing instrument display interface and guidance window interface in a scenario of an invalid face detection according to an embodiment of the present disclosure;
FIG. 8 is a schematic diagram showing instrument display interface and guidance window interface in a scenario of face feature information collection according to an embodiment of the present disclosure;
FIG. 9 illustrates a schematic structural diagram of a vehicle-mounted system according to an embodiment of the present disclosure;
FIG. 10 illustrates a schematic structural diagram of another vehicle-mounted system according to an embodiment of the present disclosure; and
FIG. 11 illustrates a schematic structural diagram of still another vehicle-mounted system according to an embodiment of the present disclosure.

### DETAILED DESCRIPTION

Technical solutions in the embodiments of the present disclosure will be described clearly and completely below with reference to the accompanying drawings in the embodiments of the present disclosure. Apparently, the described embodiments are some but not all of the embodiments of the present disclosure. All other embodiments obtained by those of ordinary skills in the art based on the embodiments of the present disclosure without creative efforts shall fall within the protection scope of the present disclosure.

It is to be noted that the terms "first", "second", "third", and "fourth" in the specification and the claims of the present disclosure are used for distinguishing between different objects rather than describing a particular order. The terms such as "comprise", "have" or any other variants thereof in the embodiments of the present disclosure are intended to cover a non-exclusive inclusion, for example, processes, methods, systems, products or devices comprising a series of steps or units are not limited to these steps or units listed explicitly, but comprise other steps or units not listed explicitly, or other steps or units inherent to these processes, methods, systems, products or devices.

Embodiments of the present disclosure disclose a method for guidance of face login setting, a vehicle-mounted system, and a vehicle. By using this method, a user in the vehicle can be guided to perform face login setting, such that operability of the face login setting is improved. A detailed description is made below with reference to the accompanying drawings.

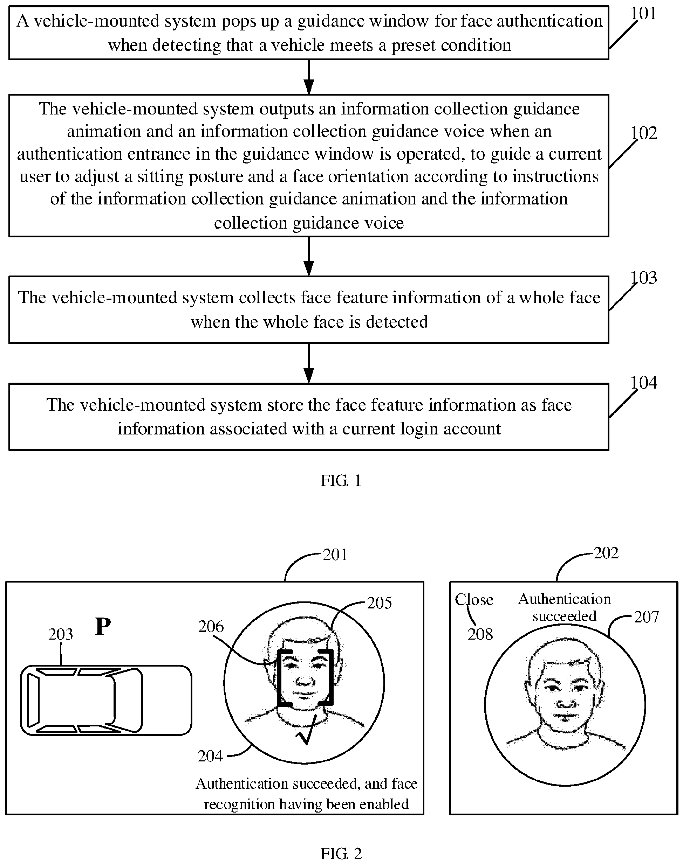

Referring to FIG. 1, FIG. 1 illustrates a schematic flow chart of a method for guidance of face login setting according to an embodiment of the present disclosure. As shown in FIG. 1, this method is applied to a vehicle-mounted system and specifically may include following steps.

The vehicle-mounted system pops up a guidance window for face authentication when it is detected that a vehicle meets a preset condition.

In this embodiment of the present disclosure, the vehicle-mounted system may display, on a vehicle-mounted display device in the form of a pop-up window, the guidance window for face authentication. The vehicle-mounted display device may include a central control screen, an instrument, a head-up display (HUD) or the like, but not limited thereto. The guidance window provides an operable authentication entrance and a close icon. When it is detected that the authentication entrance is operated, it enters into a face authentication mode and Step 102 is performed. The guidance window is closed when it is detected that the close icon is operated. Alternatively, the vehicle-mounted system may automatically close the guidance window if no operation on the guidance window is detected within preset waiting time (for example, 20s) after the guidance window for face authentication is popped up; or the vehicle-mounted system may automatically close the guidance window when it is detected that the vehicle is not in a stop state. As can be seen, this not only can ensure that the guidance window neither occupies a display interface for a long time nor has a negative effect on properly using other functions (for example, map navigation, and requesting a song) of the vehicle, but also can ensure that the guidance window is not displayed until the vehicle is in the stop state, thereby ensuring vehicle driving safety.

As an alternative implementation, Step 101 specifically includes:
outputting a login success page and a login success voice by the vehicle-mounted system when successful account login is detected, wherein the login success page at least includes a current login account;
adjusting facilities in the vehicle by the vehicle-mounted system according to vehicle setting information corresponding to the current login account;
determining by the vehicle-mounted system whether the vehicle meets the preset condition and whether the current login account is associated with face information, wherein the preset condition includes a face recognition function having been enabled for the vehicle and the vehicle being in a stop state; and
popping up the guidance window for face authentication by the vehicle-mounted system when the vehicle meets the preset condition and the current login account is not associated with the face information.

The vehicle-mounted system may output a scan code login guidance page on the vehicle-mounted display device, to guide the current user to login an account in a specified application on the user's mobile terminal (such as a mobile phone, a tablet computer, and so on) according to instructions of the scan code login guidance page, open a scan code login interface of the application, and utilize the camera device of the user's mobile terminal to scan two-dimensional code information displayed on the scan code login guidance page to achieve account login on the vehicle. Alternatively, the vehicle-mounted system may also directly output an account login page on the vehicle-mounted display device in response to the user's login request, and accept account information and password information entered by the user on the account login page, to achieve account login when the account information and the password information are validated. Alternatively, the vehicle-mounted system may also establish a connection with the user's mobile terminal via Bluetooth, and automatically achieve account login directly according to user information associated with the user's mobile terminal. However, the embodiments of the present disclosure are not limited thereto.

The login success page may display the account information (such as an account name and an account headshot) of the current login account, and may also display a message corresponding to a successful account login scene in combination with voice broadcast. For example, when the account name of the current login account is sea spray, the message displayed on the login success page may be "welcome back, sea spray", and the vehicle-mounted system may broadcast, through an in-vehicle speaker, the login success voice "welcome back".

In addition, the vehicle-mounted system prestores vehicle setting information corresponding to different user accounts, and the vehicle setting information corresponding to each of the user accounts includes, for example, seat adjustment angle, audio setting information, and map setting information preset by the user. Therefore, various applications (such as audio players, map navigation, etc.) and hardware equipment (such as seats) of the vehicle where the vehicle-mounted system is provided are adjusted according to the vehicle setting information corresponding to the current login account, such that the vehicle may be synchronously set based on vehicle usage habits of different users, thereby improving the user experience.

It is to be understood that after adjusting the facilities in the vehicle, the vehicle-mounted system does not pop up the guidance window for face authentication if the vehicle does not meet any one of the preset conditions or the current login account is associated with the face information.

As another alternative implementation, Step 101 may specifically include:
determining by the vehicle-mounted system whether the current login account already exists when it is detected that system upgrade has been completed for the vehicle;
determining by the vehicle-mounted system whether the vehicle meets the preset condition and whether the current login account is associated with the face information when the current login account exists, wherein the preset condition includes a current system version of the vehicle being a preset system version, the vehicle not performing an initialization of a central control screen, and a face recognition function having been enabled for the vehicle; and
popping up the guidance window for face authentication by the vehicle-mounted system when the vehicle meets the preset condition and the current login account is not associated with the face information.

In the scenario of system upgrade for the vehicle, the vehicle-mounted system does not pop up the guidance window for face authentication if the vehicle does not meet any one of the preset conditions or the current login account is associated with the face information. The preset system version generally is a system version in which the face recognition function is enabled for the vehicle for the first time. Therefore, by limiting the preset system version, it is avoidable that uncomfortable experience caused by repeatedly popping up the guidance window every time when the system is upgraded. In addition, the initialization of the central control screen generally includes face authentication, and thus it is a deduplication strategy to satisfy the premise that the initialization of the central control screen is not executed.

Further alternatively, if the current login account does not exist, the vehicle-mounted system may also directly pop up the guidance window for face authentication, such that a new face account is created when the authentication entrance in the guidance window is operated, and Step 102 and Step 103 are performed. Finally, the vehicle-mounted system stores the face feature information as the face information associated with the face account. As can be seen, by implementing the alternative implementation, in addition to performing face authentication on an existing account, a new face account can be created when no account is logged in to directly perform face authentication on the new face account without additional account login operations.

The vehicle-mounted system outputs an information collection guidance animation and an information collection guidance voice when the authentication entrance in the guidance window is operated, to guide the current user to adjust a sitting posture and a face orientation according to instructions of the information collection guidance animation and the information collection guidance voice.

In this embodiment of the present disclosure, the vehicle-mounted system may synchronously output the information collection guidance animation on the guidance window interface of the central control screen and the instrument display interface, and play the information collection guidance voice through the in-car speaker, to guide the current user to perform face authentication by combining animation with voice.

In Step 103, when detecting a whole face, the vehicle-mounted system collects face feature information of the whole face.

In this embodiment of the present disclosure, the whole face typically refers to a face having five sense organs.

In Step 104, the vehicle-mounted system stores the face feature information as the face information associated with the current login account.

As an alternative implementation, after Step 104, this solution may further include:
outputting, by the vehicle-mounted system, an authentication success page and/or an authentication success voice, wherein the authentication success page and the authentication success voice are configured for indicating that the face authentication is successful.

Still alternatively, the vehicle-mounted system may output a first authentication success page on the instrument display interface and output a second authentication success page on the guidance window interface of the central control screen, and may synchronously broadcast the authentication success voice. Referring to FIG. 2, FIG. 2 is a schematic diagram showing instrument display interface and guidance window interface under an authentication success scenario according to an embodiment of the present disclosure. It is to be understood that in FIG. 2, the page displayed in the instrument display interface 201 is a possible example of the first authentication success page, the page displayed in the guidance window interface 202 is a possible example of the second authentication success page, and the first authentication success page and/or the second authentication success page may also include a variety of other alternative implementations. However, the embodiments of the present disclosure are not limited thereto.

In the instrument display interface 201 of FIG. 2, the left side of the interface includes a vehicle icon 203. The letter "P" above the vehicle icon 203 is configured for indicating that the vehicle is in a parking state. The right side of the interface includes a face display area 204, wherein the face display area 204 is configured for displaying a user face 205 captured. A face recognition box 206 is configured for performing feature location on the user face 205. Beneath the face display area 204 there is displayed a message content indicating "authentication succeeded, and face recognition having been enabled". The guidance window interface 202 of FIG. 2 includes an account headshot 207 of the current login account and a message content indicating "authentication succeeded". In addition, the guidance window interface 202 also includes an operable close icon 208 for closing the guidance window. Furthermore, the vehicle-mounted system also can play, through the in-vehicle speaker, an authentication success voice indicating "authentication succeeded".

Further alternatively, after the vehicle-mounted system outputs the authentication success page and/or the authentication success voice, the following steps may also be included.

The vehicle-mounted system exits from the face recognition mode after waiting for preset duration of stay (such as 2s), and synchronously closes the authentication success page in the guidance window interface of the central control screen and the instrument display interface.

The vehicle-mounted system outputs an experience guidance page in the guidance window interface of the central control screen when the current login account completes the face authentication for the first time, to guide the user to actually experience the face recognition function of the vehicle according to instructions of the experience guidance page; wherein the experience guidance page provides an operable experience entrance.

Alternatively, the vehicle-mounted system automatically outputs an account management page in the guidance window interface of the central control screen when it is not the first time for the current login account to complete the face authentication.

As can be seen, by implementing the method described in FIG. 1, when it is detected that the vehicle meets the preset condition, by popping up the guidance window for face authentication, the user is directly guided to operate on an authentication entrance in the guidance window to enter a face authentication process. That is, it is unnecessary for the user to manually search for the face authentication entrance from a personal information page because the user can be timely informed and guided to finish the face authentication, and thus operation steps may be simplified. Moreover, unnecessary re-shooting operations can be reduced, and operability and efficiency of face authentication can be increased. Furthermore, an accuracy rate of subsequent face recognition can also be greatly increased by collecting more accurate face feature information.

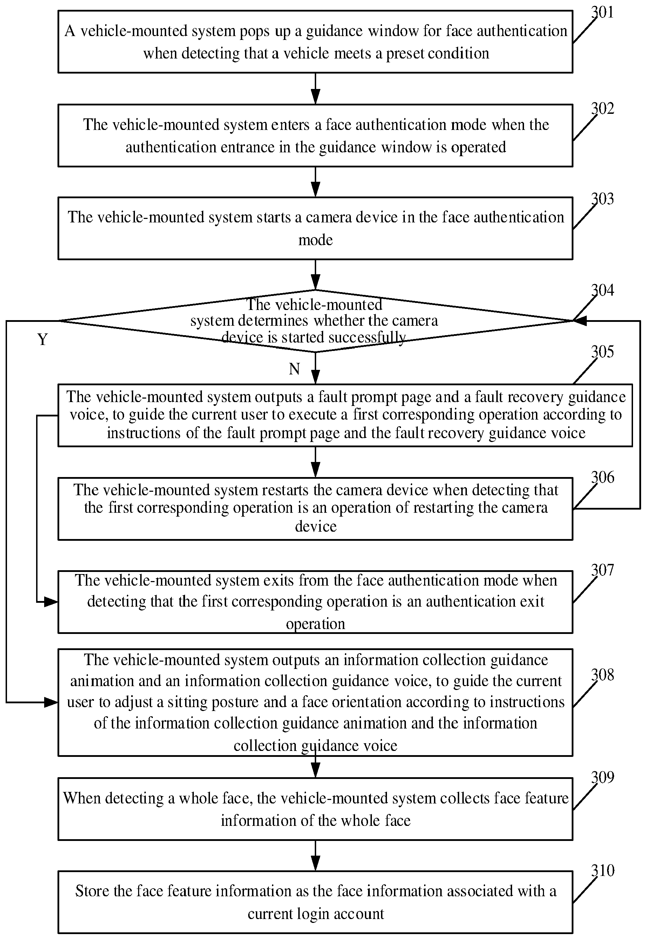

Referring to FIG. 3, FIG. 3 illustrates a schematic flow chart of another method for guidance of face login setting according to an embodiment of the present disclosure. As shown in FIG. 3, this method may include following steps.

In Step 301, a vehicle-mounted system pops up a guidance window for face authentication when detecting that a vehicle meets a preset condition.

In Step 302, the vehicle-mounted system enters a face authentication mode when the authentication entrance in the guidance window is operated.

In Step 303, the vehicle-mounted system starts a camera device in the face authentication mode.

In Step 304, the vehicle-mounted system determines whether the camera device is started successfully. Step 305 is performed if the camera device is not started successfully; and Step 308 is performed if the camera device is started successfully.

In Step 305, the vehicle-mounted system outputs a fault prompt page and a fault recovery guidance voice, to guide the current user to execute a first corresponding operation according to instructions of the fault prompt page and the fault recovery guidance voice. Furthermore, Step 306 or Step 307 is performed.

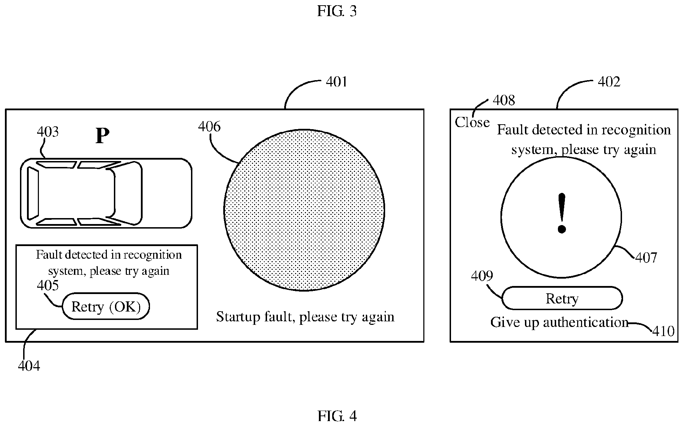

In this embodiment of the present disclosure, the vehicle-mounted system may output a first fault prompt page on the instrument display interface, and output a second fault prompt page on the guidance window interface of the central control screen, and may synchronously broadcast the fault recovery guidance voice. Referring to FIG. 4, FIG. 4 is a schematic diagram showing instrument display interface and guidance window interface in a scenario of launch failure of the camera device according to an embodiment of the present disclosure. It is to be understood that in FIG. 4, the page displayed in the instrument display interface 401 is a possible example of the first fault prompt page, the page displayed in the guidance window interface 402 is a possible example of the second fault prompt page, and the first fault prompt page and/or the second fault prompt page may also include a variety of other alternative implementations. However, the embodiments of the present disclosure are not limited thereto.

In the instrument display interface 401 in FIG. 4, the left side of the interface includes a vehicle icon 403. The letter "P" above the vehicle icon 403 is configured for indicating that the vehicle is in a parking state, and a prompt box 404 below the vehicle icon 403 includes a message content indicating "fault detected in recognition system, please try again" and an operable retry icon 405. The right side of the interface includes the face display area 406. As can be seen, due to the startup fault at this moment, the user face cannot be displayed in the face display area 406. A message content indicating "startup fault, please try again" is displayed beneath the face display area 406. In the guidance window interface 402 of FIG. 4, the interface includes a default headshot 407 indicative of startup fault and a message content indicating "fault detected in recognition system, please try again". In addition, the guidance window interface 402 also includes an operable close icon 408, a retry icon 409, and an icon for giving up authentication 410. When the retry icon 409 is operated, the vehicle-mounted system performs Step 304 again. When the icon for giving up authentication 410 is operated, the vehicle-mounted system exits from the face authentication mode. Furthermore, the vehicle-mounted system also can play, through an in-vehicle speaker, a fault recovery guidance voice indicating "startup fault, please try again or exit".

In Step 306, when detecting that the first corresponding operation is an operation of restarting the camera device, the vehicle-mounted system restarts the camera device and performs Step 304.

In Step 307, the vehicle-mounted system exits from the face authentication mode when detecting that the first corresponding operation is an authentication exit operation.

After Step 305, as an alternative implementation, the vehicle-mounted system determines that the operation of restarting the camera device is detected when detecting an operation of clicking the retry icon in the first fault prompt page or the second fault prompt page. Alternatively, the vehicle-mounted system determines that the authentication exit operation is detected when detecting an operation of clicking the icon for giving up authentication in the first fault prompt page or the second fault prompt page.

As another alternative implementation, the vehicle-mounted system determines that the operation of restarting the camera device is detected when detecting that a first steering control switch is operated, wherein the first steering control switch is configured to control to restart the camera device. Alternatively, the vehicle-mounted system may determine that the authentication exit operation is detected when detecting that a second steering control switch is operated, wherein the second steering control switch is configured to control to exit from the face authentication mode. As can be seen, it is not limited to the way of touching a display screen, the user may also directly control the process of face authentication through the steering control switch, and thus the convenience of operation is improved.

In this case, for example, if the first steering control switch is a right wheel confirm button for steering control, the fault recovery guidance voice outputted from the vehicle-mounted system may also include "retry by clicking the right wheel confirm button for steering control" to guide the user to operate the corresponding steering control switch according to actual needs.

In Step 308, the vehicle-mounted system outputs an information collection guidance animation and an information collection guidance voice, to guide the current user to adjust a sitting posture and a face orientation according to instructions of the information collection guidance animation and the information collection guidance voice.

As can be seen, by implementing the above Steps 302 to 308, and by detecting startup status of the camera device, the fault prompt page and the fault recovery guidance voice can be outputted when the camera device launches failed, to guide the user to perform the operation of restarting the camera device or the authentication exit operation, such that the fault can be solved in time, and the face authentication processes can be effectively promoted.

In Step 309, when detecting a whole face, the vehicle-mounted system collects face feature information of the whole face.

In Step 310, the vehicle-mounted system stores the face feature information as the face information associated with a current login account.

As can be seen, by implementing the method described in FIG. 3, when it is detected that the vehicle meets the preset condition, by popping up the guidance window for face authentication, the user is directly guided to operate on an authentication entrance in the guidance window to enter a face authentication process. That is, it is unnecessary for the user to manually search for the face authentication entrance from a personal information page because the user can be timely informed and guided to finish the face authentication, and thus operation steps may be simplified. In addition, when the camera device launches failed, the fault prompt page and the fault recovery guidance voice can be outputted to guide the user to execute the operation of restarting the camera device or the authentication exit operation, such that the fault can be removed in time, and the face authentication process can be effectively promoted. Moreover, unnecessary re-shooting operations can be reduced, and operability and efficiency of face authentication can be increased. Furthermore, an accuracy rate of subsequent face recognition can also be greatly increased by collecting more accurate face feature information.

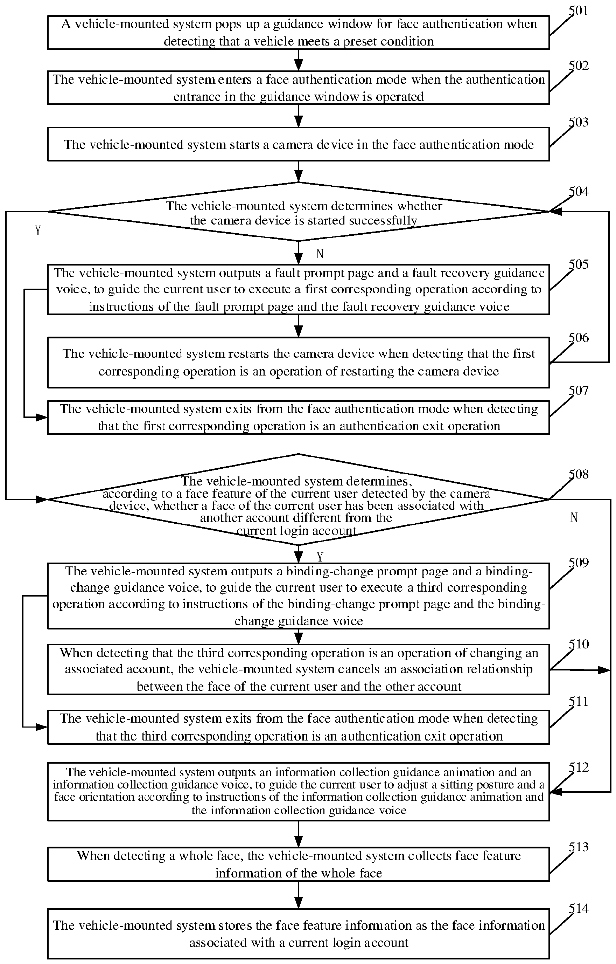

Referring to FIG. 5, FIG. 5 illustrates a schematic flow chart of still another method for guidance of face login setting according to an embodiment of the present disclosure. As shown in FIG. 5, this method may include following Steps 501 to 507.

Detailed description of Steps 301 to 307 in the Embodiment II is referred to for the description of Steps 501 to 507, which are omitted in this embodiment of the present disclosure.

In Step 508, the vehicle-mounted system determines, according to a face feature of the current user detected by the camera device, whether a face of the current user has been associated with another account different from the current login account. Step 509 is performed when the determination result is yes; and Step 512 is performed when the determination result is NO.

In Step 509, the vehicle-mounted system outputs a binding-change prompt page and a binding-change guidance voice, to guide the current user to execute a third corresponding operation according to instructions of the binding-change prompt page and the binding-change guidance voice. In addition, Step 510 or Step 511 is performed.

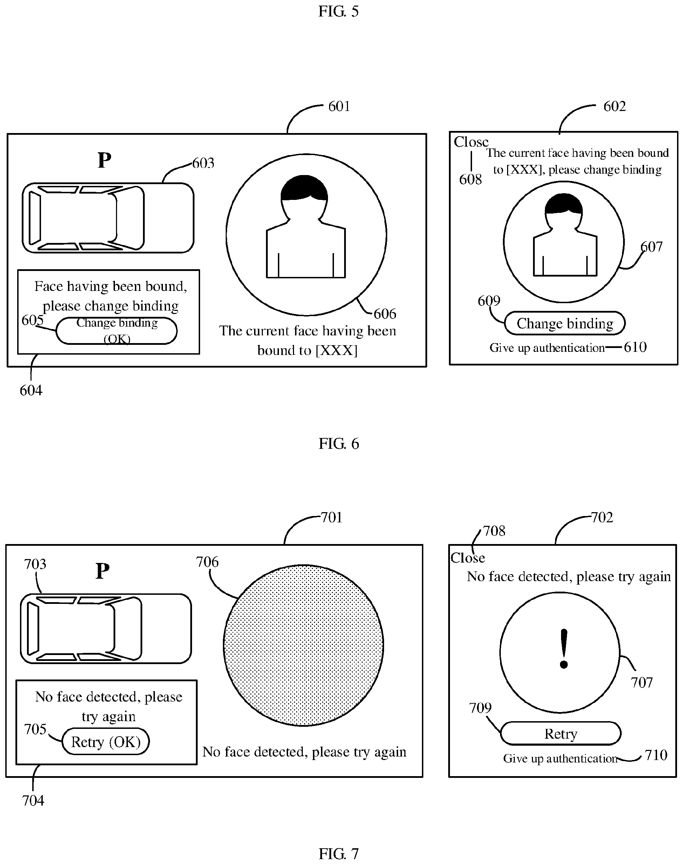

In this embodiment of the present disclosure, the vehicle-mounted system may output a first binding-change prompt page on the instrument display interface, and output a second binding-change prompt page on the guidance window interface of the central control screen, and may synchronously broadcast the binding-change guidance voice. Referring to FIG. 6, FIG. 6 is a schematic diagram showing instrument display interface and guidance window interface under an account binding-change scenario according to an embodiment of the present disclosure. It is to be understood that in FIG. 6, the page displayed in the instrument display interface 601 is a possible example of the first binding-change prompt page, the page displayed in the guidance window interface 602 is a possible example of the second binding-change prompt page, and the first binding-change prompt page and/or the second binding-change prompt page may also include a variety of other alternative implementations. However, the embodiments of the present disclosure are not limited thereto.

In the instrument display interface 601 of FIG. 6, the left side of the interface includes a vehicle icon 603. The letter "P" above the vehicle icon 603 is configured for indicating that the vehicle is in a parking state, and a prompt box 604 below the vehicle icon 603 includes a message content indicating "face having been bound, please change binding" and an operable binding-change icon 605. An account headshot 606 of another account is displayed on the right side of the interface. A message content indicating "the current face having been bound to [XXX]" is displayed beneath the account headshot 606, wherein "XXX" may represent an account name of the other account. The guidance window interface 602 of FIG. 6 includes an account headshot 607 of the other account and a message content indicating "the current face having been bound to [XXX], please change the binding or exit". In addition, the guidance window interface also includes an operable close icon 608, a binding-change icon 609, and an icon for giving up authentication 610. When the binding-change icon 609 is operated, the vehicle-mounted system performs Step 510. When the icon for giving up authentication 610 is operated, the vehicle-mounted system exits from the face authentication mode. Furthermore, the vehicle-mounted system also can play, through the in-vehicle speaker, a binding-change guidance voice indicating "the current face having been bound, please change the binding or exit".

Further alternatively, the vehicle-mounted system outputs a third binding-change prompt page and a fourth binding-change prompt page when the face of the current user has been associated with the other account and the vehicle-mounted system is unable to obtain account information of the other account. The third binding-change prompt page and the fourth binding-change prompt page may include a personal default headshot and a message content indicating "the current face having been bound, please change the binding or exit".

As an alternative implementation, after the camera device is successfully started, and before the vehicle-mounted system determines, according to a face feature of the current user detected by the camera device, whether a face of the current user has been associated with another account different from the current login account, this solution may also include following steps.

The vehicle-mounted system determines whether the whole face of the current user is detected by the camera device.

When the determination result is yes, the vehicle-mounted system performs the step of determining, according to a face feature of the current user detected by the camera device, whether a face of the current user has been associated with another account different from the current login account.

When the determination result is no, the vehicle-mounted system outputs a face detection invalidation prompt page and a face detection guidance voice, to guide the current user to adjust the sitting posture and execute a second corresponding operation according to instructions of the face detection invalidation prompt page and the face detection guidance voice.

When detecting that the second corresponding operation is an operation of restarting the face detection, the vehicle-mounted system performs the step of determining whether the whole face of the current user is detected by the camera device.

The vehicle-mounted system exits from the face authentication mode when detecting that the second corresponding operation is an authentication exit operation.

The whole face refers to a face having five sense organs. The vehicle-mounted system may output a first face detection invalidation prompt page on the instrument display interface, and output a second face detection invalidation prompt page on the guidance window interface of the central control screen, and may synchronously broadcast the face detection guidance voice. Referring to FIG. 7, FIG. 7 is a schematic diagram showing instrument display interface and guidance window interface in a scenario of an invalid face detection according to an embodiment of the present disclosure. It is to be understood that in FIG. 7, the page displayed in the instrument display interface 701 is a possible example of the first face detection invalidation prompt page, the page displayed in the guidance window interface 702 is a possible example of the second face detection invalidation prompt page, and the first face detection invalidation prompt page and/or the second face detection invalidation prompt page may also include a variety of other alternative implementations. However, the embodiments of the present disclosure are not limited thereto.

In the instrument display interface 701 in FIG. 7, the left side of the interface includes a vehicle icon 703. The letter "P" above the vehicle icon 703 is configured for indicating that the vehicle is in a parking state, and a prompt box 704 below the vehicle icon 703 includes a message content indicating "no face detected, please try again" and an operable retry icon 705. The right side of the interface includes a face display area 706. As can be seen, because no face is detected at this moment, the user face cannot be displayed in the face display area 706. A message content indicating "no face detected, please try again" is displayed beneath the face display area 706. In the guidance window interface 702 of FIG. 7, the interface includes a default headshot 707 indicative of face detection invalidation and a message content indicating "no face detected, please try again". In addition, the guidance window interface 702 also includes an operable close icon 708, a retry icon 709, and an icon for giving up authentication 710. When the retry icon 709 is operated, the vehicle-mounted system reperforms the step of determining whether the whole face of the current user is detected by the camera device. When the icon for giving up authentication 710 is operated, the vehicle-mounted system exits from the face authentication mode.

Furthermore, the vehicle-mounted system may also play the face detection guidance voice through the in-vehicle speaker based on the face of the current user detected by the camera device. For example, when a distance between the face of the current user and the lens of the camera device is too near to detect the whole face of the current user by the camera device, the vehicle-mounted system may output a face detection guidance voice indicating "face not detected, please sit up straight and try again".

As can be seen, by implementing the alternative implementation, when it is unable to detect the whole face of the current user by means of the camera device, the user can be guided to adjust the sitting posture and to restart the face detection by outputting the face detection invalidation prompt page and the face detection guidance voice, such that a success rate of face detection can be increased.

Further, as an alternative implementation, when the whole face of the current user is not detected, and before the vehicle-mounted system outputs a face detection invalidation prompt page and a face detection guidance voice, this solution may also include:
adjusting, by the vehicle-mounted system, a vehicle seat posture according to detected incomplete face information of the current user, and determining whether the whole face of the current user can be detected after the vehicle seat posture is adjusted.

When the determination result is yes, the vehicle-mounted system performs Step 508.

When the determination result is no, the vehicle-mounted system performs the step of outputting a face detection invalidation prompt page and a face detection guidance voice.

Specifically, when the incomplete face information is information of an upper part of the face, the vehicle-mounted system controls a vehicle seat to ascend. When the incomplete face information is information of a lower part of the face, the vehicle-mounted system controls the vehicle seat to descend. When the incomplete face information is information of a left part of the face, the vehicle-mounted system controls the vehicle seat to rotate left. When the incomplete face information is information of a right part of the face, the vehicle-mounted system controls the vehicle seat to rotate right. As can be seen, by implementing the above alternative implementation, based on the incomplete face of the current user detected by the camera device, the vehicle seat posture can be adaptively adjusted without manual operation, such that the whole face of the current user can be detected by the camera device, thereby improving intelligence of the face detection.

In Step 510, when detecting that the third corresponding operation is an operation of changing an associated account, the vehicle-mounted system cancels an association relationship between the face of the current user and the other account, and performs Step 512.

In Step 511, the vehicle-mounted system exits from the face authentication mode when detecting that the third corresponding operation is an authentication exit operation.

After Step 509, as an alternative implementation, the vehicle-mounted system may determine that the operation of restarting the face detection is detected when detecting an operation of clicking the binding-change icon in the first binding-change guidance page or the second binding-change guidance page. Alternatively, the vehicle-mounted system may determine that the authentication exit operation is detected when detecting an operation of clicking the icon for giving up authentication in the first binding-change guidance page or the second binding-change guidance page.

As another alternative implementation, the vehicle-mounted system may determine that the operation of restarting the face detection is detected when detecting that a third steering control switch is operated, wherein the third steering control switch is configured to control to restart the face detection. Alternatively, the vehicle-mounted system may determine that the authentication exit operation is detected when detecting that a second steering control switch is operated, wherein the second steering control switch is configured to control to exit from the face authentication mode.

In this case, for example, if the third steering control switch is a right wheel confirm button for steering control, the binding-change guidance voice outputted from the vehicle-mounted system may also include "change binding by clicking the right wheel confirm button for steering control" to guide the user to operate the corresponding steering control switch according to actual needs.

In Step 512, the vehicle-mounted system outputs an information collection guidance animation and an information collection guidance voice, to guide the current user to adjust a sitting posture and a face orientation according to instructions of the information collection guidance animation and the information collection guidance voice.

As can be seen, by implementing the above Steps 508-512, when determining that the face of the current user has been associated with another account according to the face feature of the current user, the user can be guided to execute the binding-change operation by outputting the binding-change guidance page and the binding-change guidance voice, such that it is avoidable that the same face information is repeatedly associated with a plurality of accounts, thereby improving the accuracy of subsequent face login.

In Step 513, when detecting a whole face, the vehicle-mounted system collects face feature information of the whole face.

In Step 514, the vehicle-mounted system stores the face feature information as the face information associated with a current login account.

As an alternative implementation, Step 512 specifically may include:
outputting, by the vehicle-mounted system, a first information collection guidance animation and a first information collection guidance voice, to guide the current user to adjust the sitting posture and turn a frontal face to a lens of the camera device according to instructions of the first information collection guidance animation and the first information collection guidance voice.

Correspondingly, Step 513 specifically may include:
outputting, by the vehicle-mounted system when a whole frontal face of the current user is detected by means of the camera device, a first target guidance animation and a first target guidance voice, and collecting frontal face feature information of the current user, wherein the first target guidance animation and the first target guidance voice are configured for indicating that the frontal face feature information is being collected and for guiding the current user to keep the current sitting posture.

Step 514 specifically may include:
storing, by the vehicle-mounted system, the frontal face feature information as the face information associated with the current login account.

Specifically, the vehicle-mounted system may synchronously output the first information collection guidance animation on the guidance window interface of the central control screen and the instrument display interface, and may broadcast a first information collection sound effect to indicate to start to perform the step of frontal face information collection. Next, the vehicle-mounted system may broadcast the first information collection guidance voice to guide the current user to adjust the sitting posture and turn the frontal face to the lens of the camera device.

As can be seen, by implementing the above alternative implementation, the current user can be guided to adjust the sitting posture and orientation of the frontal face by combining animation with voice, and the progress of the face information collection is prompted when the whole frontal face of the current user is detected, such that the current user is guided to correctly and cooperatively perform the step of face information collection, thereby increasing the efficiency of face information collection.

Further, as an alternative implementation, after the vehicle-mounted system collects the frontal face feature information of the current user, this solution may further include:
outputting, by the vehicle-mounted system, a second information collection guidance animation and a second information collection guidance voice, to guide the current user to turn a left face to the lens of the camera device according to instructions of the second information collection guidance animation and the second information collection guidance voice; and
outputting, by the vehicle-mounted system when the left face of the current user is detected by means of the camera device, a second target guidance animation and a second target guidance voice, and collecting left face feature information of the current user, wherein the second target guidance animation and the second target guidance voice are configured for indicating that the left face feature information is being collected and for guiding the current user to keep the current sitting posture.

In this case, Step 514 specifically may include: storing, by the vehicle-mounted system, the frontal face feature information and the left face feature information as the face information associated with the current login account.

Specifically, the vehicle-mounted system may synchronously output the second information collection guidance animation on the guidance window interface of the central control screen and the instrument display interface, and may broadcast a second information collection sound effect to indicate to start to perform the step of left face information collection. Next, the vehicle-mounted system may broadcast the second information collection guidance voice to guide the current user to turn the left face to the lens of the camera device. As can be seen, by implementing the alternative implementation, after the frontal face feature information of the current user is collected, the current user is guided to turn the left face to the lens of the camera device by combining animation with voice. Furthermore, the left face feature information of the current user can be collected, and the frontal face feature information and the left face feature information are jointly stored as the face information associated with the current login account, to increase accuracy of face recognition.

Still further, as an alternative implementation, after the vehicle-mounted system collects the left face feature information of the current user, this solution may further include:
outputting, by the vehicle-mounted system, a third information collection guidance animation and a third information collection guidance voice, to guide the current user to turn a right face to the lens of the camera device according to instructions of the third information collection guidance animation and the third information collection guidance voice; and
outputting, by the vehicle-mounted system when the right face of the current user is detected by means of the camera device, a third target guidance animation and a third target guidance voice, and collecting right face feature information of the current user, wherein the third target guidance animation and the third target guidance voice are configured for indicating that the right face feature information is being collected and for guiding the current user to keep the current sitting posture.

In this case, Step 514 specifically may include: storing, by the vehicle-mounted system, the frontal face feature information, the left face feature information and the right face feature information as the face information associated with the current login account.

Specifically, the vehicle-mounted system may synchronously output the third information collection guidance animation on the guidance window interface of the central control screen and the instrument display interface, and may broadcast a third information collection sound effect to indicate to start to perform the step of right face information collection. Next, the vehicle-mounted system may broadcast the third information collection guidance voice to guide the current user to turn the right face to the lens of the camera device. As can be seen, by implementing the alternative implementation, the current user also can be guided to turn the right face to the lens of the camera device, the right face feature information of the current user is collected, and the frontal face feature information, the left face feature information and the right face feature information are jointly stored as the face information associated with the current login account, to further increase the accuracy of face recognition.

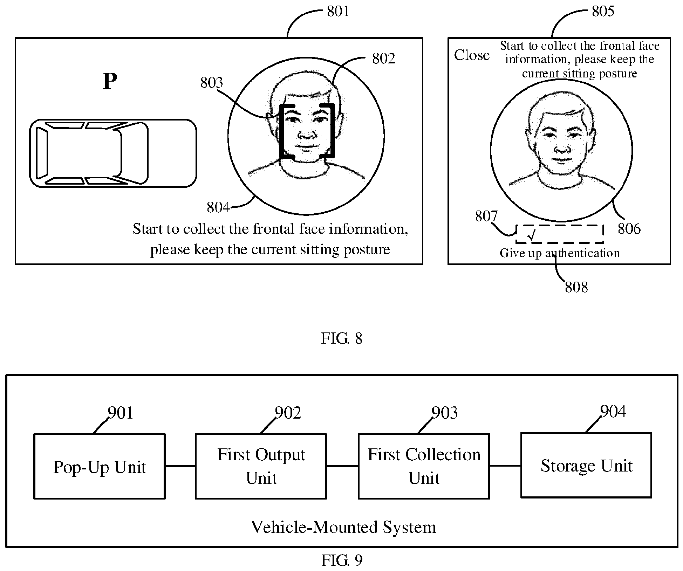

A scenario of frontal face feature information collection is taken as an example, referring to FIG. 8, FIG. 8 is a schematic diagram showing instrument display interface and guidance window interface in a scenario of face feature information collection according to an embodiment of the present disclosure. In FIG. 8, when the whole frontal face of the current user is detected by the camera device, the vehicle-mounted system may display a face recognition box 803 at the user face 802 in the instrument display interface 801 to indicate that the face feature has been locked, and may output the first target guidance animation and play the first target guidance voice (such as "start to collect the frontal face information, please keep the current sitting posture") . Furthermore, a message content indicating "start to collect the frontal face information, please keep the current sitting posture" is both displayed below the face display area 804 in the instrument display interface 80 and on the top of the guidance window interface 805. In addition, in the guidance window interface 805, a step prompt icon 807 and an operable icon for giving up authentication 808 are displayed beneath an account headshot 806, wherein an icon "√" in the step prompt icon 807 may be configured for indicating a step being performed, and an icon "•" may indicate an unfinished step. Alternatively, each time when a step is performed, a collection completion sound effect is outputted to remind the current user that the information collection is completed. Scenarios of left face feature information collection and right face feature information collection are similar to the scenario of frontal face feature information collection, and thus are not unnecessarily elaborated herein.

In addition, as an alternative implementation, this solution may further include:
in the face authentication mode, exiting from the face authentication mode and recording a first interrupt node of the face authentication when the vehicle-mounted system detects that the vehicle is not in a stop state, to reenter the face authentication mode when it is detected that the vehicle restores the stop state, and restarting the face authentication by taking the first interrupt node as a start point in the reentered face authentication mode; or
in the face authentication mode, exiting from the face authentication mode and recording a second interrupt node of the face authentication when the vehicle-mounted system detects an incoming call signal, to reenter the face authentication mode when detecting end of the incoming call signal, and restarting the face authentication by taking the second interrupt node as a start point in the reentered face authentication mode; or
in the face authentication mode, exiting from the face authentication mode and recording a third interrupt node of the face authentication when the vehicle-mounted system detects a voice wake-up command, to reenter the face authentication mode, and restarting the face authentication by taking the third interrupt node as a start point in the reentered face authentication mode.

Generally, the face authentication needs to be interrupted in the case of vehicle startup, incoming call, and voice wake-up. Therefore, a process node in the event of interrupt can be recorded by implementing the above alternative implementation, and after the end of the interrupt, the face authentication can be restarted directly taking the interrupt node as a start point, thereby reducing repetitive operations.

As can be seen, by implementing the method described in FIG. 5, the user can be timely informed and guided to finish the face authentication, and thus operation steps may be simplified. Moreover, by reducing unnecessary re-shooting operations, operability and efficiency of face authentication can be increased, and the accuracy rate of subsequent face recognition can be greatly increased by collecting more accurate face feature information. Furthermore, when it is unable to detect the whole face of the current user by means of the camera device, the user can be guided to adjust the sitting posture and to restart the face detection by outputting the face detection invalidation prompt page and the face detection guidance voice, such that the success rate of face detection can be increased. In addition, the user can be guided to perform a binding-change operation by outputting the binding-change guidance page and the binding-change guidance voice, such that it is avoidable that the same face information is repeatedly associated with a plurality of accounts, thereby improving the accuracy of subsequent face login. Further, by combining animation with voice, the current user is guided to adjust the sitting posture, and turn the frontal face, the left face, and the right face to the lens of the camera device in sequence, and the progress of the face information collection is prompted, such that the current user is guided to correctly and cooperatively perform the step of face information collection, thereby increasing the efficiency of face information collection. Still further, a process node in the event of interrupt can be recorded, and after the end of the interrupt, the face authentication can be restarted directly taking the interrupt node as a start point, thereby reducing repetitive operations.

Referring to FIG. 9, FIG. 9 illustrates a schematic structural diagram of a vehicle-mounted system according to an embodiment of the present disclosure, As shown in FIG. 9, the vehicle-mounted system may include a pop-up unit 901, a first output unit 902, a first collection unit 903, and a storage unit 904.

The pop-up unit 901 is configured to pop up a guidance window for face authentication when detecting that a vehicle meets a preset condition.

Alternatively, the vehicle-mounted system may also include a window closing unit. The window closing unit is configured to automatically close the guidance window after the pop-up unit 901 pops up the guidance window for face authentication if no operation on the guidance window is detected within preset waiting time (for example, 20s), or automatically close the guidance window when it is detected that the vehicle is not in a stop state.

As an alternative implementation, the pop-up unit 901 includes:
a first output subunit, configured to output a login success page and a login success voice when successful account login is detected, wherein the login success page at least includes the current login account;
an adjustment subunit, configured to adjust facilities in the vehicle according to vehicle setting information corresponding to the current login account;
a first determination subunit, configured to determine whether the vehicle meets the preset condition and whether the current login account is associated with the face information, wherein the preset condition includes a face recognition function having been enabled for the vehicle and the vehicle being in a stop state; and
a first pop-up subunit, configured to pop up the guidance window for face authentication when the first determination subunit determines that the vehicle meets the preset condition and the current login account is not associated with the face information.

According to the invention, the pop-up unit 901 includes:
a second determination subunit, configured to determine whether the current login account already exists when detecting that system upgrade has been completed for the vehicle;
a third determination subunit, configured to determine whether the vehicle meets the preset condition and whether the current login account is associated with the face information when the second determination subunit determines that the current login account exists, wherein the preset condition includes a current system version of the vehicle being a preset system version, the vehicle not performing an initialization of a central control screen, and a face recognition function having been enabled for the vehicle; and
a second pop-up subunit, configured to pop up the guidance window for face authentication when the third determination subunit determines that the vehicle meets the preset condition and the current login account is not associated with the face information.

Further alternatively, the vehicle-mounted system also includes a face account creating unit. The face account creating unit is configured to directly pop up the guidance window for face authentication when the second determination subunit determines that no current login account exists, to create a new face account when the authentication entrance in the guidance window is operated, and to trigger the first output unit 902 to output the information collection guidance animation and the information collection guidance voice. Furthermore, the storage unit 904 is also configured to store the face feature information as face information associated with the face account. As can be seen, by implementing the alternative implementation, in addition to performing face authentication on an existing account, a new face account can be created when no account is logged in to directly perform face authentication on the new face account without additional account login operations.

The first output unit 902 is configured to output an information collection guidance animation and an information collection guidance voice when an authentication entrance in the guidance window is operated, to guide a current user to adjust a sitting posture and a face orientation according to instructions of the information collection guidance animation and the information collection guidance voice.

The first collection unit 903 is configured to collect face feature information of a whole face when the whole face is detected.

The storage unit 904 is configured to store the face feature information as face information associated with the current login account.

Alternatively, the vehicle-mounted system may also include a second output unit, which is configured to output an authentication success page and/or an authentication success voice, wherein the authentication success page and the authentication success voice are configured for indicating that the face authentication is successful.

Further alternatively, the vehicle-mounted system may also include:
a page closing unit, configured to exit from the face recognition mode after waiting for preset duration of stay (such as 2s) after the second output unit outputs the authentication success page and/or the authentication success voice, and to synchronously close the authentication success page in the guidance window interface of the central control screen and the instrument display interface;
an experience guidance unit, configured to output an experience guidance page in the guidance window interface of the central control screen when the current login account completes the face authentication for the first time, to guide the user to actually experience the face recognition function of the vehicle according to instructions of the experience guidance page; wherein the experience guidance page provides an operable experience entrance; and
a management page output unit, configured to automatically output an account management page in the guidance window interface of the central control screen when it is not the first time for the current login account to complete the face authentication.

As can be seen, by implementing the system described in FIG. 9, when it is detected that the vehicle meets the preset condition, by popping up the guidance window for face authentication, the user is directly guided to operate on an authentication entrance in the guidance window to enter a face authentication process. That is, it is unnecessary for the user to manually search for the face authentication entrance from a personal information page because the user can be timely informed and guided to finish the face authentication, and thus operation steps may be simplified. Moreover, unnecessary re-shooting operations can be reduced, and operability and efficiency of face authentication can be increased. Furthermore, the accuracy rate of subsequent face recognition can also be greatly increased by collecting more accurate face feature information.

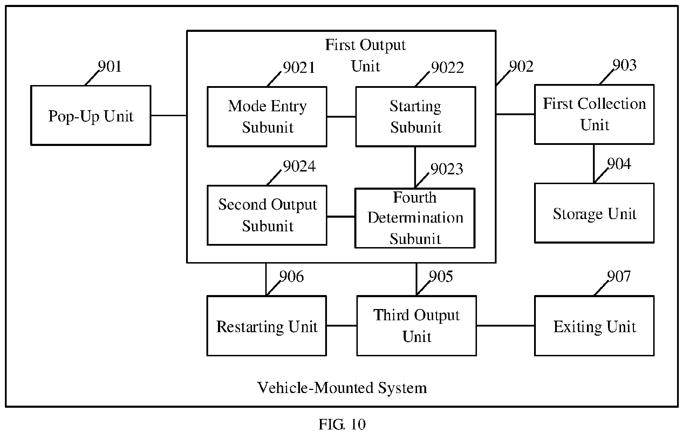

Referring to FIG. 10, FIG. 10 illustrates a schematic structural diagram of another vehicle-mounted system according to an embodiment of the present disclosure. The vehicle-mounted system as shown in FIG. 10 is obtained by optimizing the vehicle-mounted system as shown in FIG. 9. Compared with the vehicle-mounted system as shown in FIG. 9, the vehicle-mounted system as shown in FIG. 10 also includes a third output unit 905, a restarting unit 906, and an exiting unit 907.

The first output unit 902 includes:
a mode entry subunit 9021, configured to enter a face authentication mode when the authentication entrance in the guidance window is operated;
a starting subunit 9022, configured to start a camera device in the face authentication mode;
a fourth determination subunit 9023, configured to determine whether the camera device is successfully started; and
a second output subunit 9024, configured to output an information collection guidance animation and an information collection guidance voice when the fourth determination subunit 9023 determines that the camera device is successfully started, to guide the current user to adjust the sitting posture and the face orientation according to instructions of the information collection guidance animation and the information collection guidance voice.

The third output unit 905 is configured to output, when the fourth determination subunit 9023 determines that the camera device launches failed, a fault prompt page and a fault recovery guidance voice, to guide the current user to execute a first corresponding operation according to instructions of the fault prompt page and the fault recovery guidance voice.

The restarting unit 906 is configured to restart the camera device when detecting that the first corresponding operation is an operation of restarting the camera device, and trigger the fourth determination subunit 9023 to determine whether the camera device is successfully started.

The exiting unit 907 is configured to exit from the face authentication mode when detecting that the first corresponding operation is an authentication exit operation.

In this embodiment of the present disclosure, the third output unit 905 may be configured to output a first fault prompt page on the instrument display interface, and output a second fault prompt page on the guidance window interface of the central control screen, and synchronously broadcast the fault recovery guidance voice.

As an alternative implementation, the vehicle-mounted system also includes a first determination unit. The first determination unit is configured to determine that the operation of restarting the camera device is detected when detecting an operation of clicking a reset icon on the first fault prompt page or the second fault prompt page after the third output unit 905 outputs the fault prompt page and the fault recovery guidance voice. Alternatively, the first determination unit is also configured to determine that the authentication exit operation is detected when detecting an operation of clicking an icon for giving up authentication on the first fault prompt page or the second fault prompt page.

As another alternative implementation, the vehicle-mounted system also includes a second determination unit. The second determination unit is configured to determine that the operation of restarting the camera device is detected when detecting that a first steering control switch is operated after the third output unit 905 outputs the fault prompt page and the fault recovery guidance voice, wherein the first steering control switch is configured to control to restart the camera device. Alternatively, the second determination unit is configured to determine that the authentication exit operation is detected when detecting that a second steering control switch is operated, wherein the second steering control switch is configured to control to exit from the face authentication mode. As can be seen, it is not limited to the way of touching a display screen, the user may also directly control the process of face authentication through the steering control switch, and thus the convenience of operation is improved.

As can be seen, by implementing the system described in FIG. 10, when it is detected that the vehicle meets the preset condition, by popping up the guidance window for face authentication, the user is directly guided to operate on an authentication entrance in the guidance window to enter a face authentication process. That is, it is unnecessary for the user to manually search for the face authentication entrance from a personal information page because the user can be timely informed and guided to finish the face authentication, and thus operation steps may be simplified. In addition, when the camera device launches failed, the fault prompt page and the fault recovery guidance voice can be outputted to guide the user to execute the operation of restarting the camera device or the authentication exit operation, such that the fault can be removed in time, and the face authentication process can be effectively promoted. Moreover, unnecessary re-shooting operations can be reduced, and operability and efficiency of face authentication can be increased. Furthermore, the accuracy rate of subsequent face recognition can also be greatly increased by collecting more accurate face feature information.

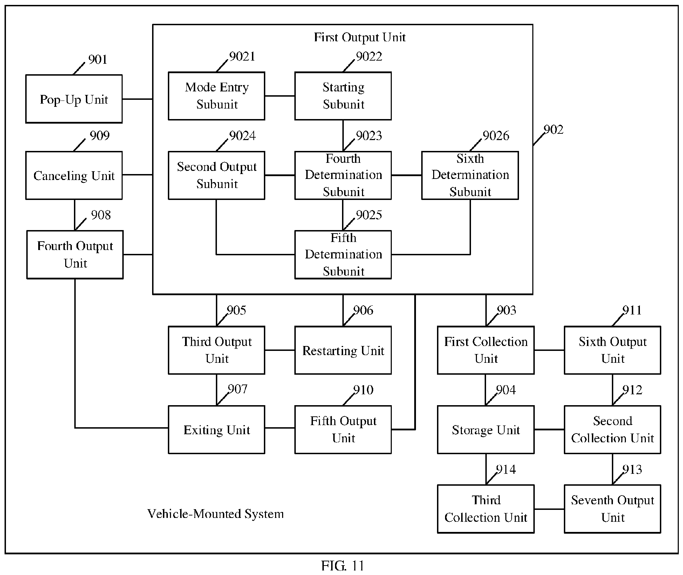

Referring to FIG. 11, FIG. 11 illustrates a schematic structural diagram of still another vehicle-mounted system according to an embodiment of the present disclosure. The vehicle-mounted system as shown in FIG. 11 is obtained by optimizing the vehicle-mounted system as shown in FIG. 10. Compared with the vehicle-mounted system as shown in FIG. 10, the vehicle-mounted system as shown in FIG. 11 also includes a fourth output unit 908, and a canceling unit 909.

The first output unit 902 also includes:
a fifth determination subunit 9025, configured to determine, after the fourth determination subunit 9023 determines that the camera device is successfully started, and before the second output subunit 9024 outputs the information collection guidance animation and the information collection guidance voice, whether a face of the current user has been associated with another account different from the current login account according to a face feature of the current user detected by the camera device. Furthermore, the fifth determination subunit 9025 is also configured to trigger the second output subunit 9024 to output the information collection guidance animation and the information collection guidance voice when determining that the face of the current user is not associated with the other account.

The fourth output unit 908 is configured to output, when the fifth determination subunit 9025 determines that the face of the current user has been associated with the other account different from the current login account, a binding-change prompt page and a binding-change guidance voice to guide the current user to execute a third corresponding operation according to instructions of the binding-change prompt page and the binding-change guidance voice. The binding-change prompt page includes a prompt content configured for indicating that the face of the current user has been associated with the other account, and account information of the other account.

The canceling unit 909 is configured to cancel, when it is detected that the third corresponding operation is an operation of changing an associated account, an association relationship between the face of the current user and the other account, and trigger the second output subunit 9024 to output the information collection guidance animation and the information collection guidance voice.

The exiting unit 907 is also configured to exit from the face authentication mode when detecting that the third corresponding operation is an authentication exit operation.

In this embodiment of the present disclosure, the fourth output unit 908 may be configured to output a first binding-change prompt page on the instrument display interface and output a second binding-change prompt page on the guidance window interface of the central control screen, and synchronously broadcast the binding-change guidance voice. Alternatively, the fourth output unit 908 is also configured to output a third binding-change prompt page and a fourth binding-change prompt page when the face of the current user has been associated with the other account and it is unable to obtain account information of the other account. The third binding-change prompt page and the fourth binding-change prompt page may include a personal default headshot and a message content indicating "the current face has been bound, please change the binding or exit".

As an alternative implementation, the vehicle-mounted system may also include a third determination unit. The third determination unit is configured to determine that the operation of restarting face detection is detected when detecting an operation of clicking the binding-change icon in the first binding-change guidance page or the second binding-change guidance page after the fourth output unit 908 outputs the binding-change prompt page and the binding-change guidance voice. Alternatively, the third determination unit is also configured to determine that the authentication exit operation is detected when detecting an operation of clicking the icon for giving up authentication in the first binding-change guidance page or the second binding-change guidance page.

As another alternative implementation, the vehicle-mounted system may also include a fourth determination unit. The fourth determination unit is configured to determine that the operation of restarting the face detection is detected when detecting that a third steering control switch is operated after the fourth output unit 908 outputs the binding-change prompt page and the binding-change guidance voice, wherein the third steering control switch is configured to control to restart the face detection. Alternatively, the fourth determination unit is also configured to determine that the authentication exit operation is detected when detecting that a second steering control switch is operated, wherein the second steering control switch is configured to control to exit from the face authentication mode.

As an alternative implementation, the vehicle-mounted system may also include a fifth output unit 910.

The first output unit 902 also includes:
a sixth determination subunit 9026, configured to determine, after the fourth determination subunit 9023 determines that the camera device is successfully started, and before the fifth determination subunit 9025 determines whether a face of the current user has been associated with another account different from the current login account according to a face feature of the current user detected by the camera device, whether a whole face of the current user is detected by means of the camera device. If the determination result is yes, the fifth determination subunit 9025 is triggered to determine whether the face of the current user has been associated with the other account different from the current login account according to the face feature of the current user detected by the camera device.

The fifth output unit 910 is configured to output, when the sixth determination subunit 9026 determines that the whole face of the current user cannot be detected by the camera device, a face detection invalidation prompt page and a face detection guidance voice, to guide the current user to adjust the sitting posture and execute a second corresponding operation according to instructions of the face detection invalidation prompt page and the face detection guidance voice.

The fifth output unit 910 may be configured to output a first face detection invalidation prompt page on the instrument display interface, output a second face detection invalidation prompt page on the guidance window interface of the central control screen, and synchronously broadcast the face detection guidance voice.

The sixth determination subunit 9026 is also configured to determine, when detecting that the second corresponding operation is the operation of restarting the face detection, whether the whole face of the current user is detected by the camera device.

The exiting unit 907 is also configured to exit from the face authentication mode when detecting that the second corresponding operation is an authentication exit operation.

Further, as an alternative implementation, the vehicle-mounted system may also include:
a seat adjusting unit, configured to adjust a vehicle seat posture according to detected incomplete face information of the current user before outputting the face detection invalidation prompt page and the face detection guidance voice when the sixth determination subunit 9026 determines that the whole face of the current user is not detected; and
a detecting unit, configured to determine whether the whole face of the current user can be detected after the vehicle seat posture is adjusted. When the determination result is yes, the fifth determination subunit 9025 is triggered to determine whether the face of the current user has been associated with the other account different from the current login account according to the face feature of the current user detected by the camera device. When the determination result is no, the fifth output unit 910 is triggered to output the face detection invalidation prompt page and the face detection guidance voice.

Specifically, when the incomplete face information is information of an upper part of the face, the vehicle-mounted system controls a vehicle seat to ascend. When the incomplete face information is information of a lower part of the face, the vehicle-mounted system controls the vehicle seat to descend. When the incomplete face information is information of a left part of the face, the vehicle-mounted system controls the vehicle seat to rotate left. When the incomplete face information is information of a right part of the face, the vehicle-mounted system controls the vehicle seat to rotate right. As can be seen, by implementing the above alternative implementation, based on the incomplete face of the current user detected by the camera device, the vehicle seat posture can be adaptively adjusted without manual operation, such that the whole face of the current user can be detected by the camera device, thereby improving intelligence of the face detection.

As an alternative implementation, the first output unit 902 is configured to output an information collection guidance animation and an information collection guidance voice, to guide the current user to adjust a sitting posture and a face orientation according to instructions of the information collection guidance animation and the information collection guidance voice. This implementation specifically is as below.

The first output unit 902 is configured to output a first information collection guidance animation and a first information collection guidance voice, to guide the current user to adjust the sitting posture and turn a frontal face to a lens of the camera device according to instructions of the first information collection guidance animation and the first information collection guidance voice.

Correspondingly, the first collection unit 903 is specifically configured to output a first target guidance animation and a first target guidance voice and synchronously collect frontal face feature information of the current user when a whole frontal face of the current user is detected by means of the camera device. The first target guidance animation and the first target guidance voice are configured for indicating that the frontal face feature information is being collected and for guiding the current user to keep the current sitting posture.

In this case, the storage unit 904 is configured to store the face feature information as face information associated with the current login account, which specifically is as below.

The storage unit 904 is configured to store the frontal face feature information as the face information associated with the current login account.

Further, as an alternative implementation, the vehicle-mounted system may also include:
a sixth output unit 911, configured to output a second information collection guidance animation and a second information collection guidance voice after the first collection unit 903 collects the frontal face feature information of the current user, to guide the current user to turn a left face to the lens of the camera device according to instructions of the second information collection guidance animation and the second information collection guidance voice; and
a second collection unit 912, configured to output a second target guidance animation and a second target guidance voice and synchronously collect left face feature information of the current user when the left face of the current user is detected by means of the camera device, wherein the second target guidance animation and the second target guidance voice are configured for indicating that the left face feature information is being collected and for guiding the current user to keep the current sitting posture.

In this case, the storage unit 904 is configured to store the face feature information as face information associated with the current login account, which specifically is as below.

The storage unit 904 is configured to store the frontal face feature information and the left face feature information as the face information associated with the current login account.

Still further, as an alternative implementation, the vehicle-mounted system may also include:
a seventh output unit 913, configured to output a third information collection guidance animation and a third information collection guidance voice after the second collection unit 912 collects the left face feature information of the current user, to guide the current user to turn a right face to the lens of the camera device according to instructions of the third information collection guidance animation and the third information collection guidance voice; and
a third collection unit 914, configured to output a third target guidance animation and a third target guidance voice and synchronously collect right face feature information of the current user when the right face of the current user is detected by means of the camera device, wherein the third target guidance animation and the third target guidance voice are configured for indicating that the right face feature information is being collected and for guiding the current user to keep the current sitting posture.

In this case, the storage unit 904 is configured to store the face feature information as face information associated with the current login account, which specifically is as below.

The storage unit 904 is configured to store the frontal face feature information, the left face feature information and the right face feature information as the face information associated with the current login account.

In addition, as an alternative implementation, the vehicle-mounted system may also include:
a first interrupt processing unit, configured to exit from the face authentication mode and record a first interrupt node of the face authentication in the face authentication mode when detecting that the vehicle is not in a stop state, to reenter the face authentication mode when detecting that the vehicle restores the stop state, and to restart the face authentication by taking the first interrupt node as a start point in the reentered face authentication mode;
a second interrupt processing unit, configured to exit from the face authentication mode and record a second interrupt node of the face authentication in the face authentication mode when an incoming call signal is detected, to reenter the face authentication mode when detecting end of the incoming call signal, and to restart the face authentication by taking the second interrupt node as a start point in the reentered face authentication mode; and
a third interrupt processing unit, configured to exit from the face authentication mode and record a third interrupt node of the face authentication in the face authentication mode when a voice wake-up command is detected, to reenter the face authentication mode, and to restart the face authentication by taking the third interrupt node as a start point in the reentered face authentication mode.

As can be seen, by implementing the system described in FIG. 11, the user can be timely informed and guided to finish the face authentication, and thus operation steps may be simplified. Moreover, by reducing unnecessary re-shooting operations, operability and efficiency of face authentication can be increased, and the accuracy rate of subsequent face recognition can be greatly increased by collecting more accurate face feature information. Furthermore, when it is unable to detect the whole face of the current user by means of the camera device, the user can be guided to adjust the sitting posture and to restart the face detection by outputting the face detection invalidation prompt page and the face detection guidance voice, such that the success rate of face detection can be increased. In addition, the user can be guided to perform a binding-change operation by outputting the binding-change guidance page and the binding-change guidance voice, such that it is avoidable that the same face information is repeatedly associated with a plurality of accounts, thereby improving the accuracy of subsequent face login. Further, by combining animation with voice, the current user is guided to adjust the sitting posture, and turn the frontal face, the left face, and the right face to the lens of the camera device in sequence, and the progress of the face information collection is prompted, such that the current user is guided to correctly and cooperatively perform the step of face information collection, thereby increasing the efficiency of face information collection. Still further, a process node in the event of interrupt can be recorded, and after the end of the interrupt, the face authentication can be restarted directly taking the interrupt node as a start point, thereby reducing repetitive operations.

This embodiment of the present disclosure discloses a vehicle, which includes any one of the vehicle-mounted systems as shown in FIG. 9- FIG. 11.

This embodiment of the present disclosure discloses a computer-readable storage medium, storing a computer program, wherein the computer program enables a computer to perform any one of the methods for guidance of face login setting as shown in FIG. 1, FIG. 3 or FIG. 5.

It may be appreciated by those of ordinary skill in the art that all or some of the steps of the methods in the above embodiments may be performed by relevant hardware as instructed by a program. The program may be stored in a computer-readable storage medium. The storage medium includes a read-only memory (ROM), a random access memory (RAM), a programmable read-only memory (PROM), an erasable programmable read only memory (EPROM), a one-time programmable read-only memory (OTPROM), an electrically-erasable programmable read-only memory (EEPROM), a compact disc read-only memory (CD-ROM), or other optical disk memory, magnetic disk memory, magnetic tape memory, or any other computer-readable storage medium that can be configured to carry or store data.

A method for guidance of face login setting, a vehicle-mounted system and a vehicle disclosed by the embodiments of the present disclosure are introduced above in detail, elaboration of principles and implementations of the present disclosure is made by using specific examples herein, and the description of the foregoing embodiments is merely intended to assist in understanding the method of the present disclosure and the core concept thereof. Also, those of ordinary skill in the art may change, in according with the concept of the present disclosure, a concrete implementation and a scope of application. In conclusion, contents of the specification shall be not interpreted as limiting the present disclosure.

## Claims

1. A method for guidance of face login setting, **characterized in that**, the method comprises:
popping up a guidance window for face authentication when detecting that a vehicle meets a preset condition (301);
entering a face authentication mode when an authentication entrance in the guidance window is operated (302);
starting a camera device in the face authentication mode (303);
determining whether the camera device is successfully started (304);
outputting an information collection guidance animation and an information collection guidance voice when the camera device is successfully started, to guide a current user to adjust a sitting posture and a face orientation according to instructions of the information collection guidance animation and the information collection guidance voice (308);
collecting face feature information of a whole face when the whole face is detected (309); and
storing the face feature information as face information associated with a current login account (310);
wherein the popping up a guidance window for face authentication when detecting that a vehicle meets a preset condition comprises:
determining whether the current login account already exists when detecting that system upgrade has been completed for the vehicle;
determining whether the vehicle meets the preset condition and whether the current login account is associated with the face information when the current login account exists, wherein the preset condition comprises a current system version of the vehicle being a preset system version, the vehicle not performing an initialization of a central control screen, and a face recognition function having been enabled for the vehicle; and
popping up the guidance window for face authentication when the vehicle meets the preset condition and the current login account is not associated with the face information.

2. The method according to claim 1, **characterized in that**, the popping up a guidance window for face authentication when detecting that a vehicle meets a preset condition, comprises:
outputting a login success page and a login success voice when successful account login is detected, wherein the login success page at least comprises the current login account;
adjusting facilities in the vehicle according to vehicle setting information corresponding to the current login account;
determining whether the vehicle meets the preset condition and whether the current login account is associated with the face information, wherein the preset condition comprises a face recognition function having been enabled for the vehicle and the vehicle being in a stop state; and
popping up the guidance window for face authentication when the vehicle meets the preset condition and the current login account is not associated with the face information.

3. The method according to claim 1, **characterized in that**, the method further comprises:
outputting, when the camera device launches failed, a fault prompt page and a fault recovery guidance voice, to guide the current user to execute a first corresponding operation according to instructions of the fault prompt page and the fault recovery guidance voice;
restarting the camera device when detecting that the first corresponding operation is an operation of restarting the camera device and performing the step of determining whether the camera device is successfully started; and
exiting from the face authentication mode when detecting that the first corresponding operation is an authentication exit operation.

4. The method according to claim 1, **characterized in that**, after the camera device is successfully started, and before the outputting an information collection guidance animation and an information collection guidance voice, the method further comprises:
determining, according to a face feature of the current user detected by the camera device, whether a face of the current user has been associated with another account different from the current login account; and
performing the step of outputting an information collection guidance animation and an information collection guidance voice when the face of the current user is not associated with the other account.

5. The method according to claim 4, **characterized in that**, after the camera device is successfully started, and before the determining, according to a face feature of the current user detected by the camera device, whether a face of the current user has been associated with another account different from the current login account, the method further comprises:
determining whether the whole face of the current user is detected by the camera device;
performing, when the whole face of the current user is detected, the step of determining, according to a face feature of the current user detected by the camera device, whether a face of the current user has been associated with another account different from the current login account;
outputting, when the whole face of the current user is not detected, a face detection invalidation prompt page and a face detection guidance voice, to guide the current user to adjust the sitting posture and execute a second corresponding operation according to instructions of the face detection invalidation prompt page and the face detection guidance voice;
performing the step of determining whether the whole face of the current user is detected by the camera device when detecting that the second corresponding operation is an operation of restarting the face detection; and
exiting from the face authentication mode when detecting that the second corresponding operation is an authentication exit operation;

6. The method according to claim 5, **characterized in that**, when the whole face of the current user is not detected, and before the outputting a face detection invalidation prompt page and a face detection guidance voice, the method further comprises:
adjusting a vehicle seat posture according to detected incomplete face information of the current user, and determining whether the whole face of the current user is detected after the vehicle seat posture is adjusted;
when the determination result is yes, performing the step of determining, according to a face feature of the current user detected by the camera device, whether a face of the current user has been associated with another account different from the current login account; and
when the determination result is no, performing the step of outputting a face detection invalidation prompt page and a face detection guidance voice.

7. The method according to claim 4, **characterized in that**, the method further comprises:
outputting, when the face of the current user has been associated with the other account, a binding-change prompt page and a binding-change guidance voice to guide the current user to execute a third corresponding operation according to instructions of the binding-change prompt page and the binding-change guidance voice, wherein the binding-change prompt page comprises a prompt content configured for indicating that the face of the current user has been associated with the other account, and account information of the other account;
when detecting that the third corresponding operation is an operation of changing an associated account, canceling an association relationship between the face of the current user and the other account, and performing the step of outputting an information collection guidance animation and an information collection guidance voice; and
exiting from the face authentication mode when detecting that the third corresponding operation is an authentication exit operation.

8. The method according to claim 1, **characterized in that**, the outputting an information collection guidance animation and an information collection guidance voice when the camera device is successfully started, to guide a current user to adjust a sitting posture and a face orientation according to instructions of the information collection guidance animation and the information collection guidance voice comprises:
outputting a first information collection guidance animation and a first information collection guidance voice when the camera device is successfully started, to guide the current user to adjust the sitting posture and turn a frontal face to a lens of the camera device according to instructions of the first information collection guidance animation and the first information collection guidance voice;
wherein the collecting face feature information of a whole face when the whole face is detected comprises:
outputting a first target guidance animation and a first target guidance voice and collecting frontal face feature information of the current user when a whole frontal face of the current user is detected by means of the camera device, wherein the first target guidance animation and the first target guidance voice are configured for indicating that the frontal face feature information is being collected and for guiding the current user to keep the current sitting posture.

9. The method according to claim 8, **characterized in that**, after the collecting face feature information of the current user, the method further comprises:
outputting a second information collection guidance animation and a second information collection guidance voice, to guide the current user to turn a left face to the lens of the camera device according to instructions of the second information collection guidance animation and the second information collection guidance voice; and
outputting a second target guidance animation and a second target guidance voice and collecting left face feature information of the current user when the left face of the current user is detected by means of the camera device, wherein the second target guidance animation and the second target guidance voice are configured for indicating that the left face feature information is being collected and for guiding the current user to keep the current sitting posture.

10. The method according to claim 9, **characterized in that**, after the collecting face feature information of the current user, the method further comprises:
outputting a third information collection guidance animation and a third information collection guidance voice, to guide the current user to turn a right face to the lens of the camera device according to instructions of the third information collection guidance animation and the third information collection guidance voice; and
outputting a third target guidance animation and a third target guidance voice and collecting right face feature information of the current user when the right face of the current user is detected by means of the camera device, wherein the third target guidance animation and the third target guidance voice are configured for indicating that the right face feature information is being collected and for guiding the current user to keep the current sitting posture;
wherein the storing the face feature information as face information associated with the current login account comprises:
storing the frontal face feature information, the left face feature information and the right face feature information as the face information associated with the current login account.

11. The method according to any one of claims 1 to 10, **characterized in that**, after the storing the face feature information as face information associated with a current login account, the method further comprises:
outputting an authentication success page and/or an authentication success voice, wherein the authentication success page and the authentication success voice are configured for indicating that the face authentication is successful.

12. The method according to claim 1 and any one of claims 3 to 10, **characterized in that**, the method further comprising:
in the face authentication mode, exiting from the face authentication mode and recording a first interrupt node of the face authentication when detecting that the vehicle is not in a stop state, to reenter the face authentication mode when detecting that the vehicle restores the stop state, and restarting the face authentication by taking the first interrupt node as a start point in the reentered face authentication mode; or
in the face authentication mode, exiting from the face authentication mode and recording a second interrupt node of the face authentication when an incoming call signal is detected, to reenter the face authentication mode when detecting end of the incoming call signal, and restarting the face authentication by taking the second interrupt node as a start point in the reentered face authentication mode; or
in the face authentication mode, exiting from the face authentication mode and recording a third interrupt node of the face authentication when a voice wake-up command is detected, to reenter the face authentication mode, and restarting the face authentication by taking the third interrupt node as a start point in the reentered face authentication mode.

13. A vehicle-mounted system, **characterized in that**, the system comprises:
a pop-up unit (901), configured to pop up a guidance window for face authentication when detecting that a vehicle meets a preset condition;
a first output unit (902), configured to output an information collection guidance animation and an information collection guidance voice when an authentication entrance in the guidance window is operated, to guide a current user to adjust a sitting posture and a face orientation according to instructions of the information collection guidance animation and the information collection guidance voice;
a first collection unit (903), configured to collect face feature information of a whole face when the whole face is detected; and
a storage unit (904), configured to store the face feature information as face information associated with a current login account;
the first output unit (902) comprising:
a mode entry subunit (9021), configured to enter a face authentication mode when the authentication entrance in the guidance window is operated;
a starting subunit (9022), configured to start a camera device in the face authentication mode;
a fourth determination subunit (9023), configured to determine whether the camera device is successfully started; and
a second output subunit (9024), configured to output an information collection guidance animation and an information collection guidance voice when the fourth determination subunit determines that the camera device is successfully started, to guide the current user to adjust the sitting posture and the face orientation according to instructions of the information collection guidance animation and the information collection guidance voice;
wherein the pop-up unit (901) comprises:
a second determination subunit, configured to determine whether the current login account already exists when detecting that system upgrade has been completed for the vehicle;
a third determination subunit, configured to determine whether the vehicle meets the preset condition and whether the current login account is associated with the face information when the second determination subunit determines that the current login account exists, wherein the preset condition comprises a current system version of the vehicle being a preset system version, the vehicle not performing an initialization of a central control screen, and a face recognition function having been enabled for the vehicle; and
a second pop-up subunit, configured to pop up the guidance window for face authentication when the third determination subunit determines that the vehicle meets the preset condition and the current login account is not associated with the face information.

14. A vehicle, comprising the vehicle-mounted system according to claim 13.

## Patentansprüche

1. Verfahren zum Führen einer Gesichts-Login-Einstellung, **dadurch gekennzeichnet, dass** das Verfahren Folgendes beinhaltet:
Einblenden eines Führungsfensters zur Gesichtsauthentifizierung, wenn erkannt wird, dass ein Fahrzeug eine voreingestellte Bedingung erfüllt (301);
Eintreten in einen Gesichtsauthentifizierungsmodus, wenn ein Authentifizierungseingang im Führungsfenster betätigt wird (302);
Starten eines Kamerageräts in dem Gesichtsauthentifizierungsmodus (303);
Feststellen, ob das Kameragerät erfolgreich gestartet ist (304);
Ausgeben einer Informationssammlungsführungsanimation und einer Informationssammlungsführungsstimme, wenn das Kameragerät erfolgreich gestartet ist, um einen aktuellen Benutzer zum Justieren einer Sitzhaltung und einer Gesichtsorientierung gemäß Anweisungen der Informationssammlungsführungsanimation und der Informationssammlungsführungsstimme zu führen (308);
Sammeln von Gesichtsmerkmalsinformationen eines ganzen Gesichts, wenn das ganze Gesicht erkannt wird (309); und
Speichern der Gesichtsmerkmalsinformationen als Gesichtsinformationen, die mit einem aktuellen Anmeldekonto assoziiert sind (310);
wobei das Einblenden eines Führungsfensters zur Gesichtsauthentifizierung, wenn erkannt wird, dass ein Fahrzeug eine voreingestellte Bedingung erfüllt, Folgendes beinhaltet:
Feststellen, ob das aktuelle Login-Konto bereits existiert, wenn erkannt wird, dass ein System-Upgrade für das Fahrzeug vollendet wurde;
Feststellen, ob das Fahrzeug die voreingestellte Bedingung erfüllt und ob das aktuelle Login-Konto mit den Gesichtsinformationen assoziiert ist, wenn das aktuelle Login-Konto existiert, wobei die voreingestellte Bedingung umfasst, dass eine aktuelle Systemversion des Fahrzeugs eine voreingestellte Systemversion ist, dass das Fahrzeug keine Initialisierung eines zentralen Steuerbildschirms durchführt und dass eine Gesichtserkennungsfunktion für das Fahrzeug aktiviert wurde; und
Einblenden des Führungsfensters zur Gesichtsauthentifizierung, wenn das Fahrzeug die voreingestellte Bedingung erfüllt und das aktuelle Login-Konto nicht mit den Gesichtsinformationen assoziiert ist.

2. Verfahren nach Anspruch 1, **dadurch gekennzeichnet, dass** das Einblenden eines Führungsfensters zur Gesichtsauthentifizierung, wenn erkannt wird, dass ein Fahrzeug eine voreingestellte Bedingung erfüllt, Folgendes beinhaltet:
Ausgeben einer Login-Erfolgsseite und einer Login-Erfolgsstimme, wenn ein erfolgreiches Konto-Login erkannt wird, wobei die Login-Erfolgsseite zumindest das aktuelle Login-Konto umfasst;
Justieren von Einrichtungen im Fahrzeug gemäß Fahrzeugeinstellungsinformationen entsprechend dem aktuellen Login-Konto;
Feststellen, ob das Fahrzeug die voreingestellte Bedingung erfüllt und ob das aktuelle Login-Konto mit den Gesichtsinformationen assoziiert ist, wobei die voreingestellte Bedingung umfasst, dass eine Gesichtserkennungsfunktion für das Fahrzeug aktiviert wurde und dass das Fahrzeug in einem Stoppzustand ist; und
Einblenden des Führungsfensters zur Gesichtsauthentifizierung, wenn das Fahrzeug die voreingestellte Bedingung erfüllt und das aktuelle Login-Konto nicht mit den Gesichtsinformationen assoziiert ist.

3. Verfahren nach Anspruch 1, **dadurch gekennzeichnet, dass** das Verfahren ferner Folgendes beinhaltet:
Ausgeben, wenn das Kameragerät nicht startet, einer Fehler-Promptseite und einer Fehlerbehebungsführungsstimme, um den aktuellen Benutzer beim Ausführen eines ersten entsprechenden Vorgangs gemäß Anweisungen der Fehler-Promptseite und der Fehlerbehebungsführungsstimme zu führen;
Neustarten des Kamerageräts, wenn erkannt wird, dass der erste entsprechende Vorgang ein Vorgang des Neustartens des Kamerageräts ist, und Durchführen des Schritts des Feststellens, ob das Kameragerät erfolgreich gestartet ist; und
Verlassen des Gesichtsauthentifizierungsmodus, wenn erkannt wird, dass der erste entsprechende Vorgang ein Authentifizierung-Verlassen-Vorgang ist.

4. Verfahren nach Anspruch 1, **dadurch gekennzeichnet, dass** das Verfahren nach dem erfolgreichen Starten des Kamerageräts und vor dem Ausgeben einer Informationssammlungsführungsanimation und einer Informationssammlungsführungsstimme ferner Folgendes beinhaltet:
Feststellen, gemäß einem von dem Kameragerät erkannten Gesichtsmerkmal des aktuellen Benutzers, ob ein Gesicht des aktuellen Benutzers mit einem anderen Konto, das sich von dem aktuellen Login-Konto unterscheidet, assoziiert wurde; und
Durchführen des Schritts des Ausgebens einer Informationssammlungsführungsanimation und einer Informationssammlungsführungsstimme, wenn das Gesicht des aktuellen Benutzers nicht mit dem anderen Konto assoziiert ist.

5. Verfahren nach Anspruch 4, **dadurch gekennzeichnet, dass** das Verfahren nach dem erfolgreichen Starten des Kamerageräts und vor dem Feststellen, gemäß einem von dem Kameragerät erkannten Gesichtsmerkmal des aktuellen Benutzers, ob ein Gesicht des aktuellen Benutzers mit einem anderen Konto, das sich von dem aktuellen Login-Konto unterscheidet, assoziiert wurde, ferner Folgendes beinhaltet:
Feststellen, ob das ganze Gesicht des aktuellen Benutzers von dem Kameragerät erkannt wird;
Durchführen, wenn das ganze Gesicht des aktuellen Benutzers erkannt wird, des Schritts des Feststellens, gemäß einem von dem Kameragerät erkannten Gesichtsmerkmal des aktuellen Benutzers, ob ein Gesicht des aktuellen Benutzers mit einem anderen Konto, das sich von dem aktuellen Login-Konto unterscheidet, assoziiert wurde;
Ausgeben, wenn das ganze Gesicht des aktuellen Benutzers nicht erkannt wird, einer Gesichtserkennungsungültigkeitserklärung-Promptseite und einer Gesichtserkennungsführungsstimme zum Führen des aktuellen Benutzers zum Justieren der Sitzhaltung und zum Ausführen eines zweiten entsprechenden Vorgangs gemäß Anweisungen der Gesichtserkennungsungültigkeitserklärung-Promptseite und der Gesichtserkennungsführungsstimme;
Durchführen des Schritts des Feststellens, ob das ganze Gesicht des aktuellen Benutzers vom Kameragerät erkannt wird, wenn erkannt wird, dass der zweite entsprechende Vorgang ein Vorgang des Neustartens der Gesichtserkennung ist; und
Verlassen des Gesichtsauthentifizierungsmodus, wenn erkannt wird, dass der zweite entsprechende Vorgang ein Authentifizierung-Verlassen-Vorgang ist.

6. Verfahren nach Anspruch 5, **dadurch gekennzeichnet, dass** das Verfahren, wenn das ganze Gesicht des aktuellen Benutzers nicht erkannt wird, und vor dem Ausgeben einer Gesichtserkennungsungültigkeitserklärung-Promptseite und einer Gesichtserkennungsführungsstimme ferner Folgendes beinhaltet:
Justieren einer Fahrzeugsitzhaltung gemäß erkannten unvollständigen Gesichtsinformationen des aktuellen Benutzers, und Feststellen, nach dem Justieren der Fahrzeugsitzhaltung, ob das ganze Gesicht des aktuellen Benutzers erkannt wird;
wenn das Bestimmungsergebnis ja ist, Durchführen des Schritts des Bestimmens, gemäß einem von dem Kameragerät erkannten Gesichtsmerkmal des aktuellen Benutzers, ob ein Gesicht des aktuellen Benutzers mit einem anderen Konto, das sich von dem aktuellen Login-Konto unterscheidet, assoziiert wurde; und
wenn das Feststellungsergebnis nein ist, Durchführen des Schritts des Ausgebens einer Gesichtserkennungsungültigkeitserklärung-Promptseite und einer Gesichtserkennungsführungsstimme.

7. Verfahren nach Anspruch 4, **dadurch gekennzeichnet, dass** das Verfahren ferner Folgendes beinhaltet:
Ausgeben, wenn das Gesicht des aktuellen Benutzers mit dem anderen Konto assoziiert wurde, einer Bindungswechsel-Promptseite und einer Bindungswechsel-Führungsstimme, um den aktuellen Benutzer beim Ausführen eines dritten entsprechenden Vorgangs gemäß Anweisungen der Bindungswechsel-Promptseite und der Bindungswechsel-Führungsstimme zu führen, wobei die Bindungswechsel-Promptseite einen Promptinhalt umfasst, der zum Anzeigen konfiguriert ist, dass das Gesicht des aktuellen Benutzers mit dem anderen Konto assoziiert wurde, und Kontoinformationen des anderen Kontos;
Aufheben, wenn erkannt wird, dass der dritte entsprechende Vorgang ein Vorgang des Änderns eines assoziierten Kontos ist, einer Assoziationsbeziehung zwischen dem Gesicht des aktuellen Benutzers und dem anderen Konto, und Durchführen des Schritts des Ausgebens einer Informationssammlungsführungsanimation und einer Informationssammlungsführungsstimme; und
Verlassen des Gesichtsauthentifizierungsmodus, wenn erkannt wird, dass der dritte entsprechende Vorgang ein Authentifizierung-Verlassen-Vorgang ist.

8. Verfahren nach Anspruch 1, **dadurch gekennzeichnet, dass** das Ausgeben einer Informationssammlungsführungsanimation und einer Informationssammlungsführungsstimme nach erfolgreichem Start des Kamerageräts zum Führen eines aktuellen Benutzers zum Justieren einer Sitzhaltung und einer Gesichtsorientierung gemäß Anweisungen der Informationssammlungsführungsanimation und der Informationssammlungsführungsstimme Folgendes beinhaltet:
Ausgeben einer ersten Informationssammlungsführungsanimation und einer ersten Informationssammlungsführungsstimme nach erfolgreichem Start des Kamerageräts zum Führen des aktuellen Benutzers zum Justieren der Sitzhaltung und zum Drehen einer Gesichtsfront zu einer Linse des Kamerageräts gemäß Anweisungen der ersten Informationssammlungsführungsanimation und der ersten Informationssammlungsführungsstimme;
wobei das Sammeln von Gesichtsmerkmalsinformationen eines ganzen Gesichts, wenn das ganze Gesicht erkannt wird, Folgendes beinhaltet:
Ausgeben einer ersten Zielführungsanimation und einer ersten Zielführungsstimme und Sammeln von Gesichtsfrontmerkmalsinformationen des aktuellen Benutzers, wenn eine ganze Gesichtsfront des aktuellen Benutzers mittels des Kamerageräts erkannt wird, wobei die erste Zielführungsanimation und die erste Zielführungsstimme konfiguriert sind zum Anzeigen, dass die Gesichtsfrontmerkmalsinformationen gesammelt werden, und zum Führen des aktuellen Benutzer zum Beibehalten der aktuellen Sitzhaltung.

9. Verfahren nach Anspruch 8, **dadurch gekennzeichnet, dass** das Verfahren nach dem Sammeln von Gesichtsmerkmalsinformationen des aktuellen Benutzers ferner Folgendes beinhaltet:
Ausgeben einer zweiten Informationssammlungsführungsanimation und einer zweiten Informationssammlungsführungsstimme, um den aktuellen Benutzer zum Drehen einer linken Gesichtsseite zur Linse des Kamerageräts gemäß Anweisungen der zweiten Informationssammlungsführungsanimation und der zweiten Informationssammlungsführungsstimme zu führen; und
Ausgeben einer zweiten Zielführungsanimation und einer zweiten Zielführungsstimme und Sammeln von Merkmalsinformationen über die linke Gesichtsseite des aktuellen Benutzers, wenn die linke Gesichtsseite des aktuellen Benutzers mittels des Kamerageräts erkannt wird, wobei die zweite Zielführungsanimation und die zweite Zielführungsstimme konfiguriert sind zum Anzeigen, dass die Merkmalsinformationen über die linke Gesichtsseite gesammelt werden, und zum Führen des aktuellen Benutzers zum Beibehalten der aktuellen Sitzhaltung.

10. Verfahren nach Anspruch 9, **dadurch gekennzeichnet, dass** das Verfahren nach dem Sammeln von Gesichtsmerkmalsinformationen des aktuellen Benutzers ferner Folgendes beinhaltet:
Ausgeben einer dritten Informationssammlungsführungsanimation und einer dritten Informationssammlungsführungsstimme, um den aktuellen Benutzer zum Drehen einer rechten Gesichtsseite zur Linse des Kamerageräts gemäß Anweisungen der dritten Informationssammlungsführungsanimation und der dritten Informationssammlungsführungsstimme zu führen; und
Ausgeben einer dritten Zielführungsanimation und einer dritten Zielführungsstimme und Sammeln von Merkmalsinformationen der rechten Gesichtsseite des aktuellen Benutzers, wenn die rechte Gesichtsseite des aktuellen Benutzers mittels des Kamerageräts erkannt wird, wobei die dritte Zielführungsanimation und die dritte Zielführungsstimme konfiguriert sind zum Anzeigen, dass die Merkmalsinformationen der rechten Gesichtsseite gesammelt werden, und zum Führen des aktuellen Benutzers zum Beibehalten der aktuellen Sitzhaltung;
wobei das Speichern der Gesichtsmerkmalsinformationen als mit dem aktuellen Login-Konto assoziierte Gesichtsinformationen Folgendes beinhaltet:
Speichern der Gesichtsfrontmerkmalsinformationen, der Merkmalsinformationen der linken Gesichtsseite und der Merkmalsinformationen der rechten Gesichtsseite als die mit dem aktuellen Login-Konto assoziierten Gesichtsinformationen.

11. Verfahren nach einem der Ansprüche 1 bis 10, **dadurch gekennzeichnet, dass** das Verfahren nach dem Speichern der Gesichtsmerkmalsinformationen als mit einem aktuellen Login-Konto assoziierte Gesichtsinformationen ferner Folgendes beinhaltet:
Ausgeben einer Authentifizierungserfolgsseite und/oder einer Authentifizierungserfolgsstimme, wobei die Authentifizierungserfolgsseite und die Authentifizierungserfolgsstimme konfiguriert sind zum Anzeigen, dass die Gesichtsauthentifizierung erfolgreich ist.

12. Verfahren nach Anspruch 1 und einem der Ansprüche 3 bis 10, **dadurch gekennzeichnet, dass** das Verfahren ferner Folgendes beinhaltet:
im Gesichtsauthentifizierungsmodus, Verlassen des Gesichtsauthentifizierungsmodus und Aufzeichnen eines ersten Unterbrechungsknotens der Gesichtsauthentifizierung, wenn erkannt wird, dass das Fahrzeug nicht in einem Stoppzustand ist, um wieder in den Gesichtsauthentifizierungsmodus einzutreten, wenn erkannt wird, dass das Fahrzeug den Stoppzustand wiederherstellt, und Neustarten der Gesichtsauthentifizierung, indem nach dem Wiedereintritt in den Gesichtsauthentifizierungsmodus der erste Unterbrechungsknoten als Startpunkt genommen wird; oder
im Gesichtsauthentifizierungsmodus, Verlassen des Gesichtsauthentifizierungsmodus und Aufzeichnen eines zweiten Unterbrechungsknotens der Gesichtsauthentifizierung, wenn ein eingehendes Anrufsignal erkannt wird, um wieder in den Gesichtsauthentifizierungsmodus einzutreten, wenn das Ende des eingehenden Anrufsignals erkannt wird, und Neustarten der Gesichtsauthentifizierung, indem nach dem Wiedereintritt in den Gesichtsauthentifizierungsmodus der zweite Unterbrechungsknoten als Startpunkt genommen wird; oder
im Gesichtsauthentifizierungsmodus, Verlassen des Gesichtsauthentifizierungsmodus und Aufzeichnen eines dritten Unterbrechungsknotens der Gesichtsauthentifizierung, wenn ein Sprachaufweckbefehl erkannt wird, um wieder in den Gesichtsauthentifizierungsmodus einzutreten, und Neustarten der Gesichtsauthentifizierung, indem nach dem Wiedereintritt in den Gesichtsauthentifizierungsmodus der dritte Unterbrechungsknoten als Startpunkt genommen wird.

13. Fahrzeugmontiertes System, **dadurch gekennzeichnet, dass** das System Folgendes umfasst:
eine Einblendeinheit (901), die zum Einblenden eines Führungsfensters zur Gesichtsauthentifizierung konfiguriert ist, wenn erkannt wird, dass ein Fahrzeug eine voreingestellte Bedingung erfüllt;
eine erste Ausgabeeinheit (902), die zum Ausgeben einer Informationssammlungsführungsanimation und einer Informationssammlungsführungsstimme konfiguriert ist, wenn ein Authentifizierungseingang im Führungsfenster betätigt wird, um einen aktuellen Benutzer zum Justieren einer Sitzhaltung und einer Gesichtsorientierung gemäß Anweisungen der Informationssammlungsführungsanimation und der Informationssammlungsführungsstimme zu führen;
eine erste Sammeleinheit (903), die zum Sammeln von Gesichtsmerkmalsinformationen eines ganzen Gesichts konfiguriert ist, wenn das ganze Gesicht erkannt wird; und
eine Speichereinheit (904), die zum Speichern der Gesichtsmerkmalsinformationen als mit einem aktuellen Login-Konto assoziierte Gesichtsinformationen konfiguriert ist;
wobei die erste Ausgabeeinheit (902) Folgendes umfasst:
eine Moduseintritts-Subeinheit (9021), die zum Eintreten in einen Gesichtsauthentifizierungsmodus konfiguriert ist, wenn der Authentifizierungseingang in dem Führungsfenster betätigt wird;
eine Startsubeinheit (9022), die zum Starten eines Kamerageräts im Gesichtsauthentifizierungsmodus konfiguriert ist;
eine vierte Feststellungssubeinheit (9023), die zum Feststellen konfiguriert ist, ob das Kameragerät erfolgreich gestartet ist; und
eine zweite Ausgabesubeinheit (9024), die zum Ausgeben einer Informationssammlungsführungsanimation und einer Informationssammlungsführungsstimme konfiguriert ist, wenn die vierte Feststellungssubeinheit feststellt, dass das Kameragerät erfolgreich gestartet ist, um den aktuellen Benutzer zum Justieren der Sitzhaltung und der Gesichtsorientierung gemäß Anweisungen der Informationssammlungsführungsanimation und der Informationssammlungsführungsstimme zu führen;
wobei die Einblendeinheit (901) Folgendes umfasst:
eine zweite Feststellungssubeinheit, die konfiguriert ist zum Feststellen, ob das aktuelle Login-Konto bereits existiert, wenn erkannt wird, dass ein System-Upgrade für das Fahrzeug vollendet wurde;
eine dritte Feststellungssubeinheit, die konfiguriert ist zum Feststellen, ob das Fahrzeug die voreingestellte Bedingung erfüllt und ob das aktuelle Login-Konto mit den Gesichtsinformationen assoziiert ist, wenn die zweite Feststellungssubeinheit feststellt, dass das aktuelle Login-Konto existiert, wobei die voreingestellte Bedingung umfasst, dass eine aktuelle Systemversion des Fahrzeugs eine voreingestellte Systemversion ist, dass das Fahrzeug keine Initialisierung eines zentralen Steuerbildschirms durchführt und dass eine Gesichtserkennungsfunktion für das Fahrzeug aktiviert wurde; und
eine zweite Einblendsubeinheit, die zum Einblenden des Führungsfensters zur Gesichtsauthentifizierung konfiguriert ist, wenn die dritte Feststellungssubeinheit feststellt, dass das Fahrzeug die voreingestellte Bedingung erfüllt und das aktuelle Login-Konto nicht mit den Gesichtsinformationen assoziiert ist.

14. Fahrzeug, das das fahrzeugmontierte System nach Anspruch 13 umfasst.

## Revendications

1. Procédé de guidage d'un paramétrage de connexion par reconnaissance faciale, **caractérisé en ce que** le procédé comprend :
une apparition d'une fenêtre de guidage pour une authentification faciale lors d'une détection du fait qu'un véhicule remplit une condition prédéfinie (301) ;
une entrée en mode d'authentification faciale lorsqu'une entrée d'authentification dans la fenêtre de guidage est effectuée (302) ;
un démarrage d'un dispositif de prise de vue dans le mode d'authentification faciale (303) ;
une détermination du fait que le dispositif de prise de vue est démarré avec succès (304) ;
une émission en sortie d'une animation de guidage de collecte d'informations et d'une voix de guidage de collecte d'informations lorsque le dispositif de prise de vue est démarré avec succès, pour guider un utilisateur actuel à ajuster une posture assise et une orientation de son visage selon des consignes de l'animation de guidage de collecte d'informations et de la voix de guidage de collecte d'informations (308) ;
une collecte d'informations de caractéristiques faciales d'un visage entier lorsque le visage entier est détecté (309) ; et
un stockage des informations de caractéristiques faciales à titre d'informations faciales associées à un compte de connexion actuel (310) ;
dans lequel l'apparition d'une fenêtre de guidage pour une authentification faciale lors d'une détection du fait qu'un véhicule remplit une condition prédéfinie comprend :
une détermination du fait que le compte de connexion actuel existe déjà ou non lors d'une détection du fait qu'une mise à niveau système a été achevée pour le véhicule ;
une détermination du fait que le véhicule remplit ou non la condition prédéfinie et du fait que le compte de connexion actuel est associé ou non à des informations faciales lorsque le compte de connexion actuel existe, dans lequel la condition prédéfinie comprend le fait qu'une version système actuelle du véhicule est une version système prédéfinie, le fait que le véhicule ne réalise pas d'initialisation d'un écran de commande central, et le fait qu'une fonction de reconnaissance faciale a été activée pour le véhicule ; et
une apparition de la fenêtre de guidage pour une authentification faciale lorsque le véhicule remplit la condition prédéfinie et le compte de connexion actuel n'est pas associé aux informations faciales.

2. Procédé selon la revendication 1, **caractérisé en ce que** l'apparition d'une fenêtre de guidage pour une authentification faciale lors d'une détection du fait qu'un véhicule remplit une condition prédéfinie comprend :
une émission en sortie d'une page de réussite de connexion et d'une voix de réussite de connexion lorsqu'une connexion à un compte réussie est détectée, dans lequel la page de réussite de connexion comprend au moins le compte de connexion actuel ;
un ajustement des équipements dans le véhicule selon des informations de paramétrage de véhicule correspondant au compte de connexion actuel ;
une détermination du fait que le véhicule remplit ou non la condition prédéfinie et du fait que le compte de connexion actuel est associé ou non aux informations faciales, dans lequel la condition prédéfinie comprend le fait qu'une fonction de reconnaissance faciale a été activée pour le véhicule et le fait que le véhicule est dans un état à l'arrêt ; et
une apparition de la fenêtre de guidage pour une authentification faciale lorsque le véhicule remplit la condition prédéfinie et le compte de connexion actuel n'est pas associé aux informations faciales.

3. Procédé selon la revendication 1, **caractérisé en ce que** le procédé comprend en outre :
une émission en sortie, lors d'un échec de lancement de dispositif de prise de vue, d'une page d'invite de défaillance et d'une voix de guidage de reprise après défaillance, pour guider l'utilisateur actuel à exécuter une première opération correspondante selon des consignes de la page d'invite de défaillance et de la voix de guidage de reprise après défaillance ;
un redémarrage du dispositif de prise de vue lors d'une détection du fait que la première opération correspondante est une opération de redémarrage du dispositif de prise de vue et une réalisation de l'étape de détermination du fait que le dispositif de prise de vue est démarré avec succès ou non ; et
une sortie du mode d'authentification faciale lors d'une détection du fait que la première opération correspondante est une opération de sortie d'authentification.

4. Procédé selon la revendication 1, **caractérisé en ce que**, après que le dispositif de prise de vue est démarré avec succès, et avant l'émission en sortie d'une animation de guidage de collecte d'informations et d'une voix de guidage de collecte d'informations, le procédé comprend en outre :
une détermination, selon une caractéristique faciale de l'utilisateur actuel détectée par le dispositif de prise de vue, du fait qu'un visage de l'utilisateur actuel a été associé ou non à un autre compte différent du compte de connexion actuel ; et
une réalisation de l'étape d'émission en sortie d'une animation de guidage de collecte d'informations et d'une voix de guidage de collecte d'informations lorsque le visage de l'utilisateur actuel n'est pas associé à l'autre compte.

5. Procédé selon la revendication 4, **caractérisé en ce que**, après que le dispositif de prise de vue est démarré avec succès, et avant la détermination, selon une caractéristique faciale de l'utilisateur actuel détectée par le dispositif de prise de vue, du fait qu'un visage de l'utilisateur actuel a été associé ou non à un autre compte différent du compte de connexion actuel, le procédé comprend en outre :
une détermination du fait que le visage entier de l'utilisateur actuel est détecté par le dispositif de prise de vue ;
une réalisation, lorsque le visage entier de l'utilisateur actuel est détecté, de l'étape de détermination, selon une caractéristique faciale de l'utilisateur actuel détectée par le dispositif de prise de vue, du fait qu'un visage de l'utilisateur actuel a été associé ou non à un autre compte différent du compte de connexion actuel ;
une émission en sortie, lorsque le visage entier de l'utilisateur actuel n'est pas détecté, d'une page d'invite d'invalidation de détection faciale et d'une voix de guidage de détection faciale, pour guider l'utilisateur actuel à ajuster la posture assise et exécuter une deuxième opération correspondante selon des consignes de la page d'invite d'invalidation de détection faciale et de la voix de guidage de détection faciale ;
une réalisation de l'étape de détermination du fait que le visage entier de l'utilisateur actuel est détecté ou non par le dispositif de prise de vue lors d'une détermination du fait que la deuxième opération correspondante est une opération de redémarrage de la détection faciale ; et
une sortie du mode d'authentification faciale lors d'une détection du fait que la deuxième opération correspondante est une opération de sortie d'authentification.

6. Procédé selon la revendication 5, **caractérisé en ce que**, lorsque le visage entier de l'utilisateur actuel n'est pas détecté, et après l'émission en sortie d'une page d'invite d'invalidation de détection faciale et d'une voix de guidage de détection faciale, le procédé comprend en outre :
un ajustement d'une posture de siège de véhicule selon des informations faciales incomplètes détectées de l'utilisateur actuel, et une détermination du fait que le visage entier de l'utilisateur actuel est détecté ou non après que la posture de siège de véhicule a été ajustée ;
lorsque le résultat de détermination est oui, une réalisation de l'étape de détermination, selon une caractéristique faciale de l'utilisateur actuel détectée par le dispositif de prise de vue, du fait qu'un visage de l'utilisateur actuel a été associé ou non à un autre compte différent du compte de connexion actuel ; et
lorsque le résultat de détermination est non, une réalisation de l'étape d'émission en sortie d'une page d'invite d'invalidation de détection faciale et d'une voix de guidage de détection faciale.

7. Procédé selon la revendication 4, **caractérisé en ce que** le procédé comprend en outre :
une émission en sortie, lorsque le visage de l'utilisateur actuel a été associé à l'autre compte, d'une page d'invite de changement de liaison et d'une voix de guidage de changement de liaison pour guider l'utilisateur actuel à exécuter une troisième opération correspondante selon des consignes de la page d'invite de changement de liaison et de la voix de guidage de changement de liaison, dans lequel la page d'invite de changement de liaison comprend un contenu d'invite configuré pour indiquer que le visage de l'utilisateur actuel a été associé à l'autre compte, et des informations de compte de l'autre compte ;
lors d'une détection du fait que la troisième opération correspondante est une opération de changement d'un compte associé, une annulation d'une relation d'association entre le visage de l'utilisateur actuel et l'autre compte, et une réalisation de l'étape d'émission en sortie d'une animation de guidage de collecte d'informations et d'une voix de guidage de collecte d'informations ; et
une sortie du mode d'authentification faciale lors d'une détection du fait que la troisième opération correspondante est une opération de sortie d'authentification.

8. Procédé selon la revendication 1, **caractérisé en ce que** l'émission en sortie d'une animation de guidage de collecte d'informations et d'une voix de guidage de collecte d'informations lorsque le dispositif de prise de vue est démarré avec succès, pour guider un utilisateur actuel à ajuster une posture assise et une orientation de son visage selon des consignes de l'animation de guidage de collecte d'informations et de la voix de guidage de collecte d'informations, comprend :
une émission en sortie d'une première animation de guidage de collecte d'informations et d'une première voix de guidage de collecte d'informations lorsque le dispositif de prise de vue est démarré avec succès, pour guider l'utilisateur actuel à ajuster une posture assise et présenter son visage tourné de face vers une lentille du dispositif de prise de vue selon des consignes de la première animation de guidage de collecte d'informations et de la première voix de guidage de collecte d'informations ;
dans lequel la collecte d'informations de caractéristiques faciales d'un visage entier lorsque le visage entier est détecté comprend :
une émission en sortie d'une première animation de guidage cible et d'une première voix de guidage cible et une collecte d'informations de caractéristiques faciales de face de l'utilisateur actuel lorsqu'un visage de face entier de l'utilisateur actuel est détecté au moyen du dispositif de prise de vue, dans lequel la première animation de guidage de cible et la première voix de guidage de cible sont configurées pour indiquer que les informations de caractéristiques faciales de face sont en cours de collecte et pour guider l'utilisateur actuel à maintenir la posture assise actuelle.

9. Procédé selon la revendication 8, **caractérisé en ce que**, après la collecte d'informations de caractéristiques faciales de l'utilisateur actuel, le procédé comprend en outre :
une émission en sortie d'une deuxième animation de guidage de collecte d'informations et d'une deuxième voix de guidage de collecte d'informations, pour guider l'utilisateur actuel à tourner la face gauche de son visage vers la lentille du dispositif de prise de vue selon des consignes de la deuxième animation de guidage de collecte d'informations et de la deuxième voix de guidage de collecte d'informations ; et
une émission en sortie d'une deuxième animation de guidage cible et d'une deuxième voix de guidage cible et une collecte d'informations de caractéristiques faciales gauches de l'utilisateur actuel lorsque la face gauche du visage de l'utilisateur actuel est détectée au moyen du dispositif de prise de vue, dans lequel la deuxième animation de guidage cible et la deuxième voix de guidage cible sont configurées pour indiquer que les informations de caractéristiques faciales gauches sont en cours de collecte et pour guider l'utilisateur actuel à maintenir la posture assise actuelle.

10. Procédé selon la revendication 9, **caractérisé en ce que**, après la collecte d'informations de caractéristiques faciales de l'utilisateur actuel, le procédé comprend en outre :
une émission en sortie d'une troisième animation de guidage de collecte d'informations et d'une troisième voix de guidage de collecte d'informations, pour guider l'utilisateur actuel à tourner la face droite de son visage vers la lentille du dispositif de prise de vue selon des consignes de la troisième animation de guidage de collecte d'informations et de la troisième voix de guidage de collecte d'informations ; et
une émission en sortie d'une troisième animation de guidage cible et d'une troisième voix de guidage cible et une collecte d'informations de caractéristiques faciales droites de l'utilisateur actuel lorsque la face droite du visage de l'utilisateur actuel est détectée au moyen du dispositif de prise de vue, dans lequel la troisième animation de guidage de cible et la troisième voix de guidage de cible sont configurées pour indiquer que les informations de caractéristiques faciales droites sont en cours de collecte et pour guider l'utilisateur actuel à maintenir la posture assise actuelle ;
dans lequel le stockage des informations de caractéristiques faciales à titre d'informations faciales associées au compte de connexion actuel comprend :
un stockage des informations de caractéristiques faciales de face, des informations de caractéristiques faciales gauches et des informations de caractéristiques faciales droites à titre d'informations faciales associées au compte de connexion actuel.

11. Procédé selon l'une quelconque des revendications 1 à 10, **caractérisé en ce que**, après le stockage des informations de caractéristiques faciales à titre d'informations faciales associées à un compte de connexion actuel, le procédé comprend en outre :
une émission en sortie d'une page de réussite d'authentification et/ou d'une voix de réussite d'authentification, dans lequel la page de réussite d'authentification et la voix de réussite d'authentification sont configurées pour indiquer que l'authentification faciale est réussie.

12. Procédé selon la revendication 1 et selon l'une quelconque des revendications 3 à 10, **caractérisé en ce que** le procédé comprenant en outre :
dans le mode d'authentification faciale, une sortie du mode d'authentification faciale et un enregistrement d'un premier noeud d'interruption de l'authentification faciale lors d'une détection du fait que le véhicule n'est pas dans un état à l'arrêt, pour réentrer en mode d'authentification faciale lors d'une détection du fait que le véhicule revient à l'arrêt, et un redémarrage de l'authentification faciale en prenant le premier noeud d'interruption à titre de point de départ dans le mode d'authentification faciale réentré ; ou
dans le mode d'authentification faciale, une sortie du mode d'authentification faciale et un enregistrement d'un deuxième noeud d'interruption de l'authentification faciale lors d'une détection d'un signal d'appel entrant, pour réentrer le mode d'authentification faciale lors d'une détection d'une fin de signal d'appel entrant, et un redémarrage de l'authentification faciale en prenant le deuxième noeud d'interruption à titre de point de départ dans le mode d'authentification faciale réentré ; ou
dans le mode d'authentification faciale, une sortie du mode d'authentification faciale et un enregistrement d'un troisième noeud d'interruption de l'authentification faciale lors d'une détection d'une commande d'activation vocale, pour réentrer le mode d'authentification faciale, et un redémarrage de l'authentification faciale en prenant le troisième noeud d'interruption à titre de point de départ dans le mode d'authentification faciale réentré.

13. Système monté sur véhicule, **caractérisé en ce que** le système comprend :
une unité de pop-up (901), configurée pour faire apparaître une fenêtre de guidage pour une authentification faciale lors d'une détection du fait qu'un véhicule remplit une condition prédéfinie ;
une première unité d'émission en sortie (902), configurée pour une émission en sortie d'une animation de guidage de collecte d'informations et d'une voix de guidage de collecte d'informations lorsqu'une entrée d'authentification dans la fenêtre de guidage est effectuée, pour guider un utilisateur actuel à ajuster une posture assise et une orientation de son visage selon des consignes de l'animation de guidage de collecte d'informations et de la voix de guidage de collecte d'informations ;
une première unité de collecte (903), configurée pour collecter des informations de caractéristiques faciales d'un visage entier lorsque le visage entier est détecté ; et
une unité de stockage (904), configurée pour stocker les informations de caractéristiques faciales à titre d'informations faciales associées à un compte de connexion actuel ;
la première unité d'émission en sortie (902) comprenant :
une sous-unité d'entrée de mode (9021), configurée pour entrer dans un mode d'authentification faciale lorsque l'entrée d'authentification dans la fenêtre de guidage est effectuée ;
une sous-unité de démarrage (9022), configurée pour démarrer un dispositif de prise de vue dans le mode d'authentification faciale ;
une quatrième sous-unité de détermination (9023), configurée pour déterminer le fait que le dispositif de prise de vue est démarré avec succès ou non ; et
une seconde sous-unité d'émission en sortie (9024), configurée pour émettre en sortie une animation de guidage de collecte d'informations et une voix de guidage de collecte d'informations lorsque la quatrième sous-unité de détermination détermine le fait que le dispositif de prise de vue est démarré avec succès, pour guider l'utilisateur actuel à ajuster la posture assise et l'orientation de son visage selon des consignes de l'animation de guidage de collecte d'informations et de la voix de guidage de collecte d'informations ;
dans lequel l'unité de pop-up (901) comprend :
une deuxième sous-unité de détermination, configurée pour déterminer le fait que le compte de connexion actuel existe déjà ou non lors d'une détection du fait qu'une mise à niveau système a été achevée pour le véhicule ;
une troisième sous-unité de détermination, configurée pour déterminer le fait que le véhicule remplit ou non la condition prédéfinie et du fait que le compte de connexion actuel est associé ou non à des informations faciales lorsque la deuxième sous-unité de détermination détermine que le compte de connexion actuel existe, dans lequel la condition prédéfinie comprend le fait qu'une version système actuelle du véhicule est une version système prédéfinie, le fait que le véhicule ne réalise pas d'initialisation d'un écran de commande central, et le fait qu'une fonction de reconnaissance faciale a été activée pour le véhicule ; et
une seconde sous-unité de pop-up, configurée pour faire apparaître la fenêtre de guidage pour une authentification faciale lorsque la troisième sous-unité de détermination détermine que le véhicule remplit la condition prédéfinie et que le compte de connexion actuel n'est pas associé aux informations faciales.

14. Véhicule, comprenant le système monté sur véhicule selon la revendication 13.
